(19) Europäisches Patentamt
European Patent Office
Office européen des brevets

(11) **EP 3 467 380 B2**

(12) **NEW EUROPEAN PATENT SPECIFICATION**
After opposition procedure

(45) Date of publication and mention
of the opposition decision:
**13.11.2024  Bulletin 2024/46**

(45) Mention of the grant of the patent:
**24.02.2021  Bulletin 2021/08**

(21) Application number: **17810104.4**

(22) Date of filing: **24.05.2017**

(51) International Patent Classification (IPC):
**F23G 5/50** *(2006.01)*     **F23G 5/44** *(2006.01)*
**B66C 13/48** *(2006.01)*

(52) Cooperative Patent Classification (CPC):
**B66C 13/48; F23G 5/444; F23G 5/50;**
F23G 2201/70; F23G 2207/20; F23K 2201/50;
Y02E 20/12

(86) International application number:
**PCT/JP2017/019396**

(87) International publication number:
**WO 2017/212923 (14.12.2017 Gazette 2017/50)**

(54) **WASTE CRANE OPERATION DEVICE AND WASTE CRANE OPERATION METHOD**

ABFALLKRANBETRIEBSANORDNUNG UND ABFALLKRANBETRIEBSVERFAHREN

DISPOSITIF ET PROCÉDÉ D'ACTIONNEMENT DE GRUE À DÉCHETS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **06.06.2016   JP 2016113021**

(43) Date of publication of application:
**10.04.2019   Bulletin 2019/15**

(73) Proprietor: **Hitachi Zosen Corporation**
**Osaka-shi, Osaka 559-8559 (JP)**

(72) Inventors:
• **OURA, Yohei**
**Osaka-shi**
**Osaka 559-8559 (JP)**
• **YAMASE, Kohei**
**Osaka-shi**
**Osaka 559-8559 (JP)**
• **KAWABATA, Kaoru**
**Osaka-shi**
**Osaka 559-8559 (JP)**

(74) Representative: **Grünecker Patent- und**
**Rechtsanwälte**
**PartG mbB**
**Leopoldstraße 4**
**80802 München (DE)**

(56) References cited:
EP-A1- 1 048 900       JP-A- 2001 033 019
JP-A- 2001 033 019     JP-A- 2007 126 246
JP-A- 2010 230 185     JP-A- 2010 275 064
JP-A- 2011 027 349     JP-A- 2015 124 955
JP-A- 2015 210 044     JP-A- 2017 042 706
JP-A- H02 293 515

EP 3 467 380 B2

**Description**

Technical Field

The present invention relates to a waste crane operating device and a waste crane operating method.

Background Art

A structure that selects waste to be thrown into a waste incinerator so as to stabilize combustion of waste in the incinerator is known in general. Such a structure that selects waste to be thrown into a waste incinerator is disclosed in Japanese Patent Laid-Open No. 10-132247, for example.

Japanese Patent Laid-Open No. 10-132247 discloses an industrial waste incineration facility including a plurality of storage tanks that store waste with a similar type and a similar amount of heat generation, a waste mixing tank to which a specified amount (mixing amount) of the waste is transferred from each of the plurality of storage tanks and in which mixing and agitation are performed, and waste supple devices that throw the waste in the waste mixing tank into an incinerator. In this industrial waste incineration facility, the mixed amount of the waste stored in each of the storage tanks and the thrown-in amount of the mixed waste are planned in order to minimize a variation in the amount of heat generation by a method for managing throwing of the industrial waste into the incinerator. Then, the waste is mixed with the planned mixed amount in the waste mixing tank, and the mixed waste is thrown into the incinerator by the planned thrown-in amount. Thus, burning of the waste in the industrial waste incinerator is stabilized.

Prior Art

Patent Document

Patent Document 1: Japanese Patent Laid-Open No. 10-132247 Further relevant prior art documents are EP 1 048 900 A1, JP 2001 033019 A and JP 2017 042706 A.

Summary of the Invention

Problems to be Solved by the Invention

In the industrial waste incineration facility disclosed in Japanese Patent Laid-Open No. 10-132247, although instability of industrial waste burning based on a variation in the amount of heat generation is significantly reduced or prevented, it is necessary to provide the plurality of storage tanks separately from the waste mixing tank, and thus there are problems that the size of the facility increases and the facility becomes complex.

The present invention has been proposed in order to solve the aforementioned problems, and an object of the present invention is to provide a waste crane operating device and a waste crane operating method each capable of significantly reducing or preventing instability of waste burning based on a variation in the amount of heat generation while significantly reducing or preventing an increase in the size of a waste incineration facility and complexity of the waste incineration facility. Means for Solving the Problems

In order to attain the aforementioned object, a waste crane operating device according to a first aspect of the present invention is defined in claim 1. Note that the "variation index value as an index of a variation amount of the composition percentage of the waste type" is a value that increases when a variation in the composition percentage of the waste type is large.

As described above, the waste crane operating device according to the first aspect of the present invention includes the controller that controls the crane to selectively grasp the waste in which the variation index value as an index of the variation amount of the composition percentage of the waste type with respect to the composition percentage of the waste type of the waste previously thrown into the waste incinerator is equal to or less than the index threshold from the waste in the pit and to throw, into the waste incinerator, the waste as the thrown-in waste to be thrown next into the waste incinerator. Accordingly, the thrown-in waste is selected from the waste in the pit and grasped by the crane, and thus it is not necessary to provide a plurality of storage tanks that store waste separately from the pit. Consequently, an increase in the size of the waste incineration facility and complexity of the waste incineration facility can be significantly reduced or prevented.

In the waste crane operating device according to the first aspect, the controller calculates the variation index value of the composition percentage of the waste type based on the data on the composition percentage of the waste type stored in the storage and controls the crane to selectively grasp the waste in which the variation index value is equal to or less than the index threshold from the waste in the pit. Accordingly, a variation in the composition percentage of waste between the previously thrown-in waste and the thrown-in waste to be thrown in next can be reduced, and thus a large variation in the amount of heat generation of the thrown-in waste can be significantly reduced or prevented. Consequently, instability of waste burning based on a variation in the amount of heat generation can be significantly reduced or prevented. Therefore, in the waste crane operating device according to the first aspect of the present invention, instability of waste burning based on a variation in the amount of heat generation can be significantly reduced or prevented while an increase in the size of the waste incineration facility and complexity of the waste incineration facility are significantly reduced or prevented.

In the aforementioned waste crane operating device according to the first aspect, the controller preferably creates the waste in which the variation index value of the composition percentage of the waste type is equal to or less than the index threshold by controlling the crane to agitate the waste in the pit when there is not the waste in which the variation index value of the composition percentage of the waste type is equal to or less than the index threshold. According to this structure, throwing of waste in which the variation index value of the composition percentage of the waste type exceeds the index threshold into the waste incinerator can be reliably significantly reduced or prevented, and thus instability of waste burning based on a variation in the amount of heat generation can be reliably significantly reduced or prevented.

In the waste crane operating device not according to the invention, the controller preferably controls the crane to selectively grasp the waste in which the variation index value of the composition percentage of the waste type is smallest among a plurality of wastes in which the variation index value of the composition percentage of the waste type is equal to or less than the index threshold from the waste in the pit and to throw the waste as the thrown-in waste into the waste incinerator when there are the plurality of wastes in which the variation index value of the composition percentage of the waste type is equal to or less than the index threshold. According to this structure, a variation in the amount of heat generation can be further significantly reduced or prevented, and thus instability of waste burning can be more reliably significantly reduced or prevented.

In the aforementioned waste crane operating device according to the invention, the controller controls the crane to selectively grasp a second waste part having a great agitation frequency among a plurality of first waste parts in the pit and to throw the second waste part as the thrown-in waste into the waste incinerator when there are the plurality of first waste parts in the pit. Here, it is believed that a plurality of waste types are mixed due to agitation in waste having a great agitation frequency, and thus the composition percentages of the waste types are further leveled as compared with waste having a low agitation frequency, and the amount of heat generation is also considered to be close to the average value. Thus, as described above, according to the structure in which the waste having a great agitation frequency is selectively grasped from the waste in the pit, the amount of heat generation can be brought close to the average value, and thus instability of waste burning can be easily significantly reduced or prevented.

In the aforementioned waste crane operating device according to the first aspect, the controller preferably controls the crane to selectively grasp the waste in which the variation index value of the composition percentage of the waste type is equal to or less than the index threshold and a composition percentage of a special waste type is equal to or less than a special waste type threshold from the waste in the pit and to throw the waste as the thrown-in waste into the waste incinerator when there is the special waste type having a large variation in an amount of heat generation during incineration in the waste in the pit. According to this structure, throwing of the waste in which the composition percentage of the special waste type is large into the waste incinerator can be significantly reduced or prevented, and thus a large variation in the amount of heat generation due to the special waste type having a large variation in the amount of heat generation can be significantly reduced or prevented. Consequently, instability of waste burning can be reliably significantly reduced or prevented.

In the aforementioned waste crane operating device according to the first aspect, the controller preferably controls the crane to selectively grasp the waste in which the variation index value of the composition percentage of the waste type is equal to or less than the index threshold from the waste in the pit using the index threshold obtained from a correlation between a degree of burning of the waste thrown into the waste incinerator and a throwing-in frequency of the waste in which the variation index value of the composition percentage of the waste type is larger than a provisional index threshold into the waste incinerator and to throw the waste as the thrown-in waste into the waste incinerator. According to this structure, an index threshold suitable for the waste incinerator can be obtained from the correlation between the degree of burning of the waste thrown into the waste incinerator and the throwing-in frequency of the waste in which the variation index value of the composition percentage of the waste type is larger than the provisional index threshold into the waste incinerator, and thus instability of waste burning based on a variation in the amount of heat generation in the waste incinerator can be reliably significantly reduced or prevented.

A waste crane operating device according to a second aspect of the present disclosure includes a crane that throws waste in a pit into a waste incinerator, a storage that stores data on a composition percentage of a waste type of the waste at a specific position in the pit, and a controller that controls the crane to selectively grasp the waste in which a variation in the composition percentage of the waste type with respect to the composition percentage of the waste type of waste previously thrown into the waste incinerator is smallest based on the data on the composition percentage of the waste type stored in the storage from the waste in the pit and to throw, into the waste incinerator, the waste as thrown-in waste to be thrown next into the waste incinerator.

As described above, the waste crane operating device according to the second aspect includes the controller that controls the crane to selectively grasp the waste in which a variation in the composition percentage of the waste type with respect to the composition percentage of the waste type of the waste previously thrown into the waste incinerator is the smallest from the waste in the pit and to throw, into the waste incinerator, the waste as the thrown-in waste to be thrown next into the waste incinerator. Thus, similar to the waste crane operating device according to the first aspect, an increase in the size of the waste incineration facility and complexity of the waste incineration facility can be significantly reduced or prevented.

In the waste crane operating device according to the second aspect, the controller controls the crane to selectively grasp the waste in which a variation in the composition percentage of the waste type is the smallest from the waste in the pit based on the data on the composition percentage of the waste type stored in the storage. Accordingly, a large variation in the amount of heat generation of the thrown-in waste can be significantly reduced or prevented as compared with the case in which other waste in which a variation in the waste type is larger is thrown into the waste incinerator. Consequently, instability of waste burning based on a variation in the amount of heat generation can be significantly reduced or prevented. Therefore, with the waste crane operating device according to the second aspect of the present invention, instability of waste burning based on a variation in the amount of heat generation can be significantly reduced or prevented while an increase in the size of the waste incineration facility and complexity of the waste incineration facility are significantly reduced or prevented.

A waste crane operating method according to a third aspect of the present invention is defined in claim 5.

In the waste crane operating method according to the third aspect of the present invention, as described above, the waste in which the variation index value as an index of the variation amount of the composition percentage of the waste type with respect to the composition percentages of the plurality of waste types of the waste previously thrown into the waste incinerator is equal to or less than the index threshold is selected as the thrown-in waste to be thrown next into the waste incinerator from the waste in the pit. Thus, similarly to the aforementioned first aspect, an increase in the size of a waste incineration facility and complexity of the waste incineration facility can be significantly reduced or prevented. In addition, a pit and a crane provided in a general waste incineration facility can be used, and thus the waste crane operating method according to the present invention can be applied to an existing waste incineration facility without providing a new waste incineration facility including a separate reservoir or the like.

The waste crane operating method according to the third aspect includes calculating the variation index value of the composition percentage of the waste type of the waste in the pit based on the data on the composition percentage of the waste type stored in the storage, and selecting the waste in which the variation index value is equal to or less than the index threshold as the thrown-in waste to be thrown next to the waste incinerator. Thus, similarly to the aforementioned first aspect, instability of waste burning based on a variation in the amount of heat generation can be significantly reduced or prevented. Therefore, in the waste crane operating method according to the third aspect of the present invention, instability of waste burning based on a variation in the amount of heat generation can be significantly reduced or prevented while an increase in the size of the waste incineration facility and complexity of the waste incineration facility are significantly reduced or prevented.

Effect of the Invention

According to the present invention, as described above, the waste crane operating device and the waste crane operating method each capable of significantly reducing or preventing instability of waste burning based on a variation in the amount of heat generation while significantly reducing or preventing an increase in the size of the waste incineration facility and complexity of the waste incineration facility can be provided.

Brief Description of the Drawings

- [Fig. 1] A schematic view of a waste incineration facility according to a first embodiment of the present invention.
- [Fig. 2] A block diagram of a waste incineration facility according to each of first to third embodiments of the present invention.
- [Fig. 3] A plan view schematically showing the periphery of a pit of the waste incineration facility according to the first embodiment of the present invention.
- [Fig. 4] A diagram illustrating a waste type change due to agitation of waste in the waste incineration facility according to the first embodiment of the present invention.
- [Fig. 5] A diagram schematically showing a waste throwing-in operation by a crane of the waste incineration facility according to the first embodiment of the present invention.

- [Fig. 6] A diagram showing the thrown-in frequency of waste having a variation index value larger than 50 and the fall time of the vapor content in a waste incineration facility according to Example of the first embodiment of the present invention.
- [Fig. 7] A crane drive control flow of the waste incineration facility according to the first embodiment of the present invention.
- [Fig. 8] A diagram schematically showing a waste throwing-in operation by a crane of the waste incineration facility according to a second embodiment.
- [Fig. 9] A crane drive control flow of the waste incineration facility according to the second embodiment
- [Fig. 10] A diagram schematically showing a waste throwing-in operation by a crane of the waste incineration facility according to a third embodiment.
- [Fig. 11] A crane drive control flow of the waste incineration facility according to the third embodiment.

Modes for Carrying Out the Invention

Embodiments embodying the present invention are hereinafter described on the basis of the drawings.

[First Embodiment]

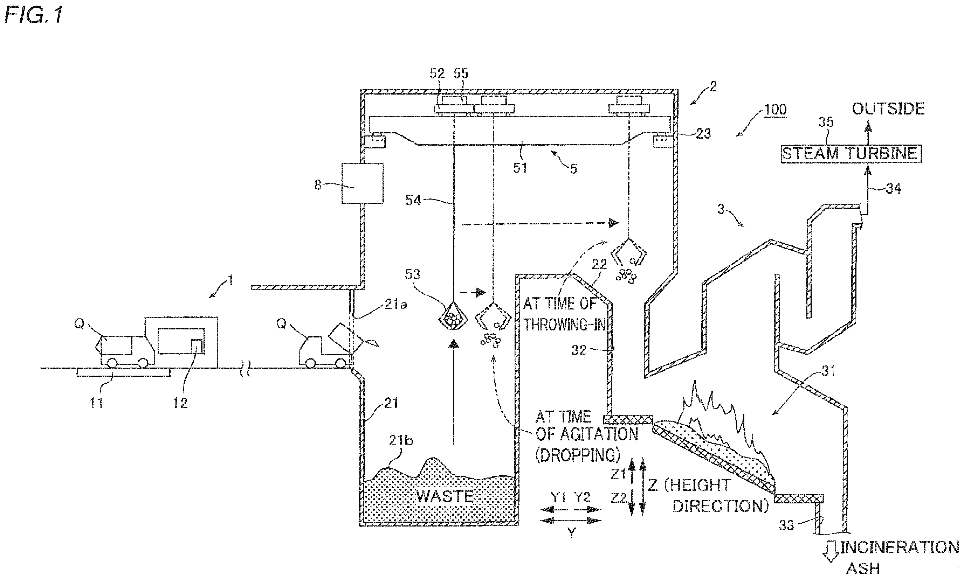

A waste incineration facility 100 including a waste crane operating device 4 according to a first embodiment of the present invention is now described with reference to Figs. 1 to 6.

<Schematic Structure of Waste Incineration Facility>

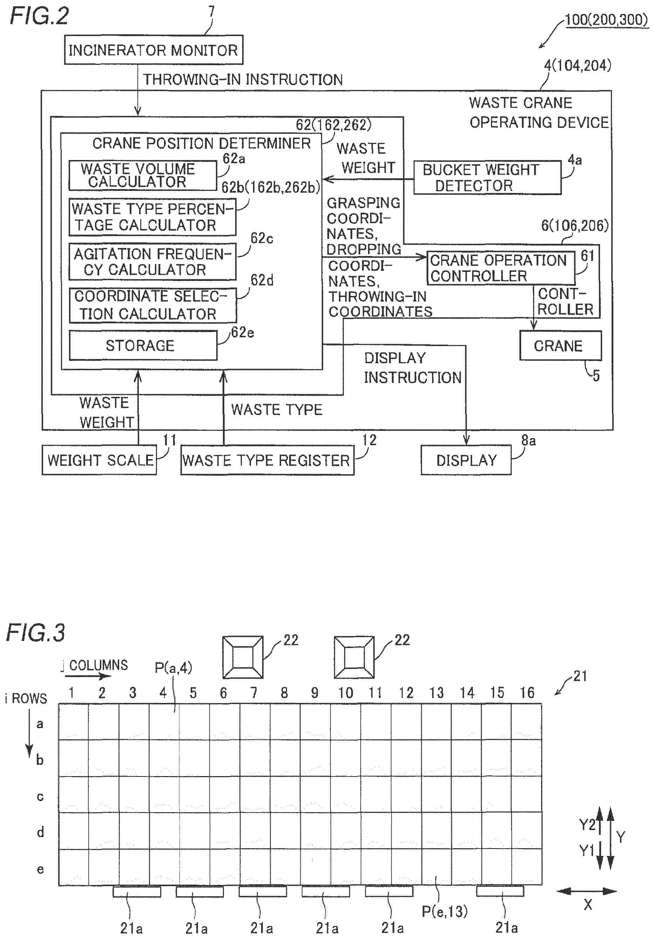

As shown in Fig. 1, the waste incineration facility 100 according to the first embodiment of the present invention includes a pre-waste-receiving measurement facility 1, a waste receiving facility 2, a waste incinerator 3, and a waste crane operating device 4 (see Fig. 2). Incidentally, the waste incineration facility 100 according to the first embodiment may be newly constructed or may be an existing waste incineration facility.

In the pre-waste-receiving measurement facility 1, the weight of a waste collection vehicle Q that has arrived at the waste incineration facility 100 is measured, and the type of waste (waste type) carried in by the waste collection vehicle Q is registered. In the waste receiving facility 2, the waste carried in by a plurality of waste collection vehicles Q is temporarily stored. The waste incinerator 3 is attached to the waste receiving facility 2, and incinerates the waste. The waste crane operating device 4 grasps the waste from above with a crane 5 and drops or throws in the grasped waste downward.

In the present embodiment, the term "dropping the waste" denotes dropping the grasped waste into a pit 21 from a certain height, and the term "throwing in the waste" denotes dropping the grasped waste into the waste incinerator 3 (hopper 22). A pair of waste incinerators 3 are aligned in a direction X (a direction orthogonal to the paper surface in Fig. 1; see Fig. 3).

The pre-waste-receiving measurement facility 1 is provided in the vicinity of an entrance/exit of the waste incineration facility 100 that precedes the waste receiving facility 2. The pre-waste-receiving measurement facility 1 includes a weight scale 11 embedded in the road surface and that measures the weight of the waste collection vehicle Q stopped thereon and a waste type register 12 in which the waste type of waste loaded on the waste collection vehicle Q is registered.

The weight scale 11 acquires the weight of the waste loaded on the waste collection vehicle Q by subtracting the weight of the waste collection vehicle Q from the measured weight. For example, in the waste type register 12, an attendant or the like registers the type of waste (flammable waste, flammable one of non-flammable waste, flammable one of bulky waste), a day of the week when waste is carried in, and an area where waste is collected as parameters indicating the waste type. Furthermore, in the waste type register 12, among waste types, the special type of waste (special waste type) having a greatly different heat quantity is registered as a special waste type. Incidentally, the special waste type includes sewage sludge, pruned waste such as trees and grasses, an animal's body, and recycling incompatible waste from a recycling facility. The sewage sludge and the recycling incompatible waste may be directly carried in the pit 21 from the waste incineration facility 100 or the recycling facility or the like (not shown) adjacent to the waste incineration facility 100 without going through the waste type register 12 and a carry-in door 21a in some cases.

As shown in Fig. 2, each of the weight scale 11 and the waste type register 12 transmits information about the acquired waste weight and information about the acquired waste type to a crane position determiner 62 of a controller 6 described below.

As shown in Fig. 1, the waste receiving facility 2 includes the pit 21 in which the waste carried in by the waste collection vehicle Q is stored, and the hopper 22 being adjacent to the pit 21 and that supplies the waste in the pit 21 to the waste incinerator 3, and a building 23 that covers the pit 21 and the hopper 22. A pair of hoppers 22 are aligned in the direction X and correspond to the pair of waste incinerators 3, respectively.

In the waste incinerator 3, a stoker-type combustion chamber 31 is provided. Furthermore, in the waste incinerator 3, a waste guide passage 32 connected to the hopper 22 is provided on the front end side (Y1 side) of the combustion chamber 31, and an ash removal port 33 is provided on the rear end side (Y2 side). In addition, a flue 34 is provided on the upper rear side (Z1 side and Y2 side) of the combustion chamber 31. A steam turbine 35 that recovers the thermal energy of flue gas by heating and evaporating feed-water using the heat of the flue gas that passes through the flue 34 is disposed in the flue 34. In order to efficiently recover the thermal energy of the flue gas in the steam turbine 35, it is preferable to continuously perform stable combustion.

As shown in Fig. 2, the waste crane operating device 4 includes the crane 5 and the controller 6. In the waste incineration facility 100, an incinerator monitor 7 that determines whether or not waste is thrown into the waste incinerator 3 based on an image of a camera (not shown) that monitors the inside of the waste incinerator 3, the vapor content in the steam turbine 35, etc. is provided. The incinerator monitor 7 controls burning of thrown-in waste in the waste incinerator 3 according to the waste type of thrown-in waste thrown into the waste incinerator 3.

As shown in Fig. 1, the crane 5 can perform an agitation operation of agitating the waste and a throwing-in operation of throwing the waste (thrown-in waste) into the incinerator 3. The agitation operation is an operation of grasping the waste in the pit 21 and agitating the waste in the pit 21 by dropping the grasped waste into the pit 21. Thus, the characteristics (composition percentages of the waste types) of the waste in the pit 21 are made uniform. Furthermore, the throwing-in operation is an operation of grasping the waste in the pit 21 based on an instruction to throw in waste from the incinerator monitor 7 and throwing the grasped waste into the combustion chamber 31 of the waste incinerator 3 via the hopper 22. Thus, the thrown-in waste is incinerated.

The crane 5 is provided above (Z1 side) the pit 21 and the hopper 22 in the building 23. Furthermore, the crane 5 includes a girder 51 provided in the vicinity of the ceiling of the building 23 so as to be movable in the direction X, and a transverse moving cart 52 disposed on the girder 51 so as to be movable in a direction Y. Furthermore, the crane 5 includes a bucket 53 that grasps the waste in the pit 21, a wire 54 that connects the bucket 53 to the transverse moving cart 52, and a winder 55 provided on the transverse moving cart 52 and that raises and lowers the bucket 53 in a height direction (direction Z) by changing the length of the wire 54.

The controller 6 includes a CPU or the like as a control circuit. The controller 6 has a function of controlling driving of the crane 5. As shown in Fig. 2, the controller 6 includes a crane operation controller 61 that performs operation control of the crane 5 including movement control of the girder 51 and the transverse moving cart 52, winding control of the winder 55, and opening and closing control of the bucket 53 and the crane position determiner 62 that calculates coordinates (coordinates in an X-Y plane) to which the bucket 53 moves, for example. The crane position determiner 62 includes a waste volume calculator 62a, a waste type percentage calculator 62b, an agitation frequency calculator 62c, a coordinate selection calculator 62d, and a storage 62e. The details of the crane position determiner 62 are described below.

The waste crane operating device 4 further includes a waste weight detector 4a. The waste weight detector 4a detects the weight of the waste when the bucket 53 of the crane 5 grasps the waste and transmits the weight to the crane position determiner 62.

As shown in Fig. 1, the waste incineration facility 100 includes an operation room 8 in which an operator monitors the waste receiving facility 2 and manually operates the crane 5. In the operation room 8, a display 8a (see Fig. 2) that displays the movement locus of the crane 5, waste types and the composition percentage of each waste type, the agitation frequency of the waste, etc. for the operator is disposed. A display instruction to the display 8a is performed by the controller 6.

(Description of Pit)

As shown in Fig. 3, the pit 21 has a rectangular parallelepiped box shape that extends in the X-Y plane and is virtually partitioned into a plurality of areas P in the X-Y plane by the controller 6. Specifically, the pit 21 is virtually partitioned into 80 (= $5 \times 16$) areas P (i, j) (i: a to e, j: 1 to 16) by the controller 6. The pit 21 is partitioned such that i rows are aligned in the direction Y and j columns are aligned in the direction X. Here, each area P is partitioned so as to have an area S enough for the bucket 53 to grasp at a time.

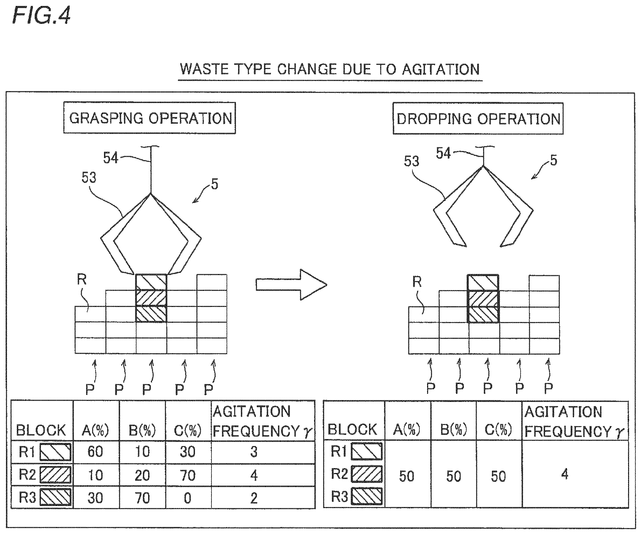

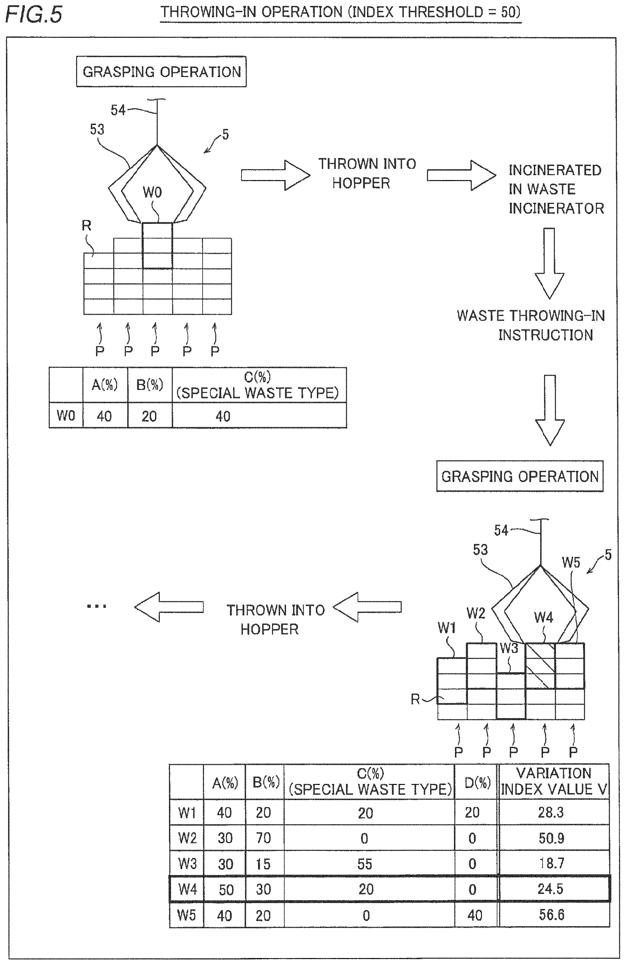

The waste in each area P is taken as a stack of rectangular parallelepiped uniform objects (blocks R; see Figs. 4 and 5) each having a height of about 0.5 m (the volume is $0.5 \times S$ (m³)) in a virtualized state. The crane position determiner 62 determines, for each block R in the area P, waste types that constitute the waste of the block R, the composition percentage of each waste type, and the agitation frequency of the waste of the block R. In Fig. 4 and Fig. 5, only a portion of the areas P in the pit 21 is extracted and shown for convenience.

On the Y1 side of the pit 21, a plurality of (six) carry-in doors 21a are provided. The carry-in doors 21a allow the waste collection vehicle Q (see Fig. 1) to carry the waste in the pit 21. The hopper 22 is provided on the Y2 side of the pit 21.

Here, when the waste of the waste collection vehicle Q is dropped into the pit 21, it is recognized that the waste has been dropped into the areas P corresponding to the carry-in door 21a. At this time, the waste type of waste dropped into the areas P and the height of the waste in the areas P are registered in the areas P corresponding to the carry-in door 21a based on the weight of the waste transmitted from the weight scale 11. The height of the waste dropped into the areas P is calculated by multiplying the weight of the waste transmitted from the weight scale 11 by a predetermined coefficient.

<Description of Crane Position Determiner>

(Description of Waste Volume Calculator)

The waste volume calculator 62a of the crane position determiner 62 has a function of calculating the volume of the waste in the areas P in the pit 21.

Specifically, when the waste in an arbitrary area P is grasped by the bucket 53 of the crane 5, the weight of the waste grasped by the bucket 53 is detected by the waste weight detector 4a. Then, the waste volume calculator 62a calculates the height of the grasped waste by dividing the weight of the grasped waste by the density (estimated value, constant) of the waste. Thus, the height of the waste in the grasped area P is reduced by the height of the grasped waste, and the height of the waste in the dropped area P is increased only by the height of the grasped and dropped waste. Then, the height of the waste in the areas P is updated to the calculated values and stored in the storage 62e.

The height of the waste in the areas P is stored in the storage 62e as the number of blocks R stacked in the areas P.

(Description of Waste Type Percentage Calculator and Composition Percentage of Waste Type)

The waste type percentage calculator 62b of the crane position determiner 62 has a function of calculating the composition percentages of waste types at a specific position in the pit 21. The specific position in the pit 21 indicates a specific height position (the position of a specific block R) in a specific area P of the pit 21.

When waste has been newly dropped from the waste collection vehicle Q into any of the areas P of the pit 21, the waste type percentage calculator 62b determines that the waste type based on the information about the waste type has been carried 100% in the block R newly added to an upper portion of the area P into which the waste has been newly dropped. Regarding the sewage sludge and the recycling incompatible waste carried in the pit 21 without going through the waste type register 12, the crane position determiner 62 registers that the special waste type has been carried 100% in the block R newly added to an upper portion of the area P in which the waste has been newly carried.

The waste type percentage calculator 62b calculates the composition percentage of waste for each block R every time the waste in the pit 21 is agitated. Specifically, when the number of blocks R of waste grasped during agitation is m, the volume of the block (s) Rj ($1 \leqq j \leqq m$) is vj ($= 0.5 \times S$ ($m^3$)), and the composition percentage of the specific waste type contained in the block(s) Rj is $\alpha j$(%), the composition percentage $\alpha$(%) of the specific waste type to the entire waste grasped while agitate agitation is calculated with the following formula (1).

[Mathematical Formula 1]

$$\alpha = \frac{\sum (\alpha j \times 10^{-2} \times vj)}{\sum vj} \times 10^2 \quad (1 \leqq j \leqq m) \quad \cdots (1)$$

Here, as an example, as shown in Fig. 4, when the composition percentages of the waste types A, B, and C in the blocks R1 to R3 are composition percentages shown in Fig. 4, respectively, the composition percentage of the waste type A after agitation is (($60 \times 10^{-2} \times 0.5 + 10 \times 10^{-2} \times 0.5 + 30 \times 10^{-2} \times 0.5$)/($0.5 + 0.5 + 0.5$) $\times 100$) = 50%. The composition percentage of the waste type B after agitation is (($10 \times 10^{-2} \times 0.5 + 20 \times 10^{-2} \times 0.5 + 70 \times 10^{-2} \times 0.5$)/($0.5 + 0.5 + 0.5$) $\times 100$) = 50%. The composition percentage of the waste type C after agitation is (($30 \times 10^{-2} \times 0.5 + 70 \times 10^{-2} \times 0.5 + 0 \times 10^{-2} \times 0.5$)/($0.5 + 0.5 + 0.5$) $\times 100$) = 50%.

The composition percentage of the waste calculated by the waste type percentage calculator 62b is stored for each block R in the storage 62e.

When a throwing-in instruction is given, the waste type percentage calculator 62b selects one of a plurality of blocks R according to the volume (weight) of the waste included in the throwing-in instruction and causes the crane 5 to grasp it. At this time, the waste type percentage calculator 62b may selectively grasp the blocks R in the different areas P one by one according to the volume (weight) of the waste included in the throwing-in instruction and throw the blocks R into the waste incinerator 3, or may selectively grasp a plurality of stacked blocks R in the same area P at a time and throw the blocks R into the waste incinerator 3.

According to the first embodiment, the waste type percentage calculator 62b calculates a variation index value of the composition percentages of the waste types with respect to the composition percentages of the waste types of the previously thrown-in waste for each waste in the pit 21. At this time, the waste type percentage calculator 62b first calculates the variation index value for each waste based on the composition percentages of the waste types for each block R stored in the storage 62e.

Then, the waste type percentage calculator 62b calculates the variation index value V for the waste at the specific position with the following formula (2) when setting the number of waste types to n, setting the composition percentage(s) of the waste type(s) of the previously thrown-in waste to xk ($1 \leqq k \leqq n$)(%), and setting the composition percentage(s) of the waste type(s) of the waste at the specific position in the pit 21 to yk ($1 \leqq k \leqq n$) (%) .
[Mathematical Formula 2]

$$V = \sqrt{\left( \sum (yk - xk)^2 \right)} \qquad (1 \leqq k \leqq n) \quad \cdots (2)$$

Here, as an example, as shown in Fig. 5, an example in which thrown-in waste of three blocks R in the same area P is selectively grasped at a time and thrown into the waste incinerator 3 is shown. At this time, an example of selecting thrown-in waste from one of five areas P is described.

Incidentally, waste W0 previously thrown into the waste incinerator 3 includes three waste types A, B, and C. Here, the waste types A and B are ordinary waste (flammable waste and flammable one of non-flammable waste, for example), and the waste type C is a special waste type having a greatly different heat quantity. Furthermore, the composition percentages of the waste types A, B, and C in the waste W0 are 40%, 20%, and 40%, respectively.

Here, thrown-in waste to be thrown next into the waste incinerator 3 is selected from the waste in the pit 21 based on the throwing-in instruction from the incinerator monitor 7. At this time, it is assumed that the incinerator monitor 7 gives an instruction to throw in waste of three blocks.

At this time, the waste type percentage calculator 62b selects the thrown-in waste to be thrown into the waste incinerator 3 from wastes W1 to W5 each including three stacked blocks R. Specifically, first, the waste type percentage calculator 62b calculates the composition percentages of the waste types A to D in the wastes W1 to W5 based on the data on the composition percentages of the waste types for each block R stored in the storage 62e. At this time, it is assumed that the composition percentages of the waste types A, B, C, and D in the wastes W1 to W5 are composition percentages shown in Fig. 5. The waste type D is an ordinary waste type not included in the waste W0.

Then, the waste type percentage calculator 62b calculates the variation index value V of the composition percentages of the waste types for each of the wastes W1 to W5 based on the above formula (2). For example, for the waste W1, the variation index value V is calculated as V = $\sqrt{((40 - 40)^2 + (20 - 20)^2 + (20 - 40)^2 + (20 - 0)^2)} \approx 28.3$. The variation index values V for the wastes W1 to W5 are shown in Fig. 5.

According to the first embodiment, the waste type percentage calculator 62b selects the thrown-in waste to be thrown into the waste incinerator 3 from wastes having a variation index value equal to or less than an index threshold. The index threshold is a value acquired for each waste incineration facility 100 by a method for acquiring the index threshold described below. That is, the index threshold (= 50) shown in Fig. 5 is an example. In the example shown in Fig. 5, the index threshold is 50, and thus the waste type percentage calculator 62b selects the thrown-in waste from the wastes W1, W3, and W4 having a variation index value V of 50 or less among the wastes W1 to W5.

The waste type percentage calculator 62b selects waste in which the composition percentage of the special waste type having a large variation in the amount of heat generation during incineration is equal to or less than a special waste type threshold (50%, for example) as the thrown-in waste from the waste in the pit 21. In other words, in the example shown in Fig. 5, the waste type percentage calculator 62b does not select the waste W3 (the waste type C is 55%), in which the composition percentage of the special waste type (waste type C) exceeds 50%, of the wastes W1, W3, and W4.

The waste type percentage calculator 62b selects waste having the smallest variation index value as the thrown-in waste from the wastes having a variation index value equal to or less than the index threshold and in which the composition percentage of the special waste is equal to or less than the special waste type threshold. In other words, in the example shown in Fig. 5, the waste type percentage calculator 62b selects the waste W4 having the smallest variation index value V as the thrown-in waste from the wastes W1 and W4.

Thereafter, the coordinate selection calculator 62d calculates the coordinates of the area P in which the selected thrown-in waste (waste W4 in Fig. 5) is located. Then, the coordinates calculated by the coordinate selection calculator 62d are transmitted as grasping coordinates to the crane operation controller 61 of the controller 6. Thus, the operation of the crane 5 is controlled by the crane operation controller 61, and the selected thrown-in waste (waste W4 in Fig. 5) is grasped by the bucket 53 of the crane 5.

Then, the coordinate selection calculator 62d transmits the coordinates at which the hopper 22 is located as dropping coordinates to the crane operation controller 61 of the controller 6. Thus, the operation of the crane 5 is controlled by the crane operation controller 61, and the grasped thrown-in waste is moved onto the hopper 22 and is thrown into the waste incinerator 3.

(Description of Agitation Degree Calculator and Agitation Degree)

When the variation index values of all the wastes that can be thrown into the waste incinerator 3 among the waste in the pit 21 exceed the index threshold, the controller 6 agitates the waste in the pit 21 to create waste having a variation index value equal to or less than the index threshold.

Here, the agitation frequency calculator 62c of the crane position determiner 62 has a function of calculating the frequency of waste agitation per block R. Specifically, in the waste incineration facility 100, when waste is newly carried in from the waste collection vehicle Q to the areas P where the pit 21 is located, the agitation frequency calculator 62c first determines that waste in which the agitation frequency is zero has been dropped into the areas P.

Then, in the waste incineration facility 100, waste in an arbitrary area P in the pit 21 is grasped by the bucket 53 of the crane 5, and the grasped waste is dropped into the arbitrary area P in the pit 21 such that an agitation operation is performed. During this agitation operation, the agitation frequency calculator 62c calculates the agitation frequency of the block(s) R of the dropped waste. Specifically, when the number of blocks R grasped by the bucket 53 is set to N, the agitation frequency of an arbitrary block(s) Ri grasped by the bucket 53 is set to $\gamma i$, and the volume of the waste in the block(s) Ri is set to vi (= $0.5 \times S$ (m³)) ($1 \leqq i \leqq N$), the agitation frequency calculator 62c calculates the agitation frequency $\gamma$ of the block(s) R of the dropped waste based on the following formula (3).
[Mathematical Formula 3]

$$\gamma = \frac{\Sigma(\gamma i \times vi)}{\Sigma vi} + 1 \qquad (1 \leqq i \leqq N) \quad \cdots(3)$$

That is, the agitation frequency calculator 62c performs calculation such that the agitation frequency $\gamma$ of the block(s) R of the dropped waste is a value obtained by adding 1 to the average of the agitation frequency $\gamma$ of the block(s) R grasped by the bucket 53.

For example, as shown in Fig. 4, it is assumed that in an arbitrary area P, three waste blocks R (R1, R2, and R3), in which the agitation frequencies $\gamma$ are 3, 4, and 2, respectively, are grasped and dropped into the same area P. At this time, the agitation frequencies $\gamma$ of the three dropped blocks R1 to R3 are all $\gamma = ((3 \times 0.5 + 4 \times 0.5 + 2 \times 0.5)/(0.5 + 0.5 + 0.5)) + 1 = 4$.

Then, the area P into which the waste has been dropped is rewritten to a state in which the blocks R having the calculated agitation frequencies have been newly stacked and is stored in the storage 62e. As described above, the composition percentages of the waste types are also rewritten due to agitation and are stored in the storage 62e.

Here, the agitation of the waste in the pit 21 is effective for bringing the composition percentages of the waste in the blocks R close to a constant, and thus the controller 6 preferably controls the crane 5 to agitate the waste in the pit 21 during the time when there is no instruction to throw waste into the waste incinerator 3.

<Method for Acquiring Index Threshold>

According to the first embodiment, the index threshold is acquired for each waste incineration facility 100 based on the relationship between the degree of burning of the waste thrown into the waste incinerator 3 and the throwing-in frequency of the waste that satisfies the throwing-in conditions. Specifically, the index threshold is acquired based on a correlation coefficient between the fall time of the vapor content in the steam turbine 35 when the waste thrown into the waste incinerator 3 is incinerated and the throwing-in frequency of the waste in which the variation index value of the composition percentages of the waste types with respect to the composition percentages of the waste types of the previously thrown-in waste is larger than a provisional index threshold (10, 20, 30, 40, 50, or 60, for example). Both the fall time of the vapor content and the throwing-in frequency are acquired when the waste incineration facility 100 is operated.

More specifically, when the waste incineration facility 100 according to the first embodiment is operated for an operation period (1.5 months, for example), the throwing-in frequency T of the waste having a variation index value larger than the provisional index threshold in the operation period and the set value SV and the measured value PV of the vapor content in the steam turbine 35 are acquired. The throwing-in frequency T is acquired every time period (from 6 o'clock to 8 o'clock, for example) of any 2 hours of 24 hours. Furthermore, the average Tav of the throwing-in frequencies T is calculated by dividing the total sum of the twelve acquired throwing-in frequencies T by 12.

The fall time D of the vapor content is acquired from the set value SV and the measured value PV of the vapor content. The fall time D of the vapor content is acquired as the length of time in which a difference ΔV (= SV - PV) between the set value SV and the measured value PV of the vapor content exceeds 10% of the set value SV (ΔV > (0.1 × SV)). The fall time D of the vapor content is also acquired every time period of any 2 hours of 24 hours. The average Dav of the fall times D is calculated by dividing the total sum of the twelve acquired time times D by 12.

Then, a correlation coefficient c between the throwing-in frequency Th of the waste having a variation index value larger than the provisional index threshold in an arbitrary time period (from 6 o'clock to 8 o'clock, for example) and the fall time Dh of the vapor content in a time period (from 8 o'clock to 10 o'clock two hours after the time when the waste has been thrown in, for example) in which the thrown-in waste has been actually incinerated is obtained using the following formula (4). In the formula (4), M is the number of measurements (= 12) of the fall time Dh and the throwing-in frequency Th.

[Mathematical Formula 4]

$$c = \frac{\sum (Th-Tav) \times (Dh-Dav)}{\sqrt{(\sum (Th-Tav)^2)} \times \sqrt{(\sum (Dh-Dav)^2)}} \quad (1 \leqq h \leqq M) \cdots (4)$$

This correlation coefficient c is obtained for each provisional index threshold. The time lag (two hours in the above example) from when the waste has been thrown into the waste incinerator 3 until when the thrown-in waste has been actually incinerated is set properly for each waste incineration facility 100 or each waste incinerator 3. In other words, the time lag from when the waste has been thrown into the waste incinerator 3 until when the thrown-in waste has been actually incinerated is not limited to two hours.

Then, the provisional index threshold having the largest correlation coefficient c is determined as an index threshold for the waste incineration facility 100 according to the first embodiment.

The waste incineration facility 100 of Example of the first embodiment is taken as a concrete example. In Example of the first embodiment, a waste type was set for each day of the week when the waste was carried in, and waste after a certain period of time was separately set as a waste type. In other words, as waste types, eight types of Monday waste carried in on Monday, Tuesday waste carried in on Tuesday, Wednesday waste carried in on Wednesday, Thursday waste carried in on Thursday, Friday waste carried in on Friday, Saturday waste carried in on Saturday, Sunday waste carried in on Sunday, and waste carried in one week or more ago were set.

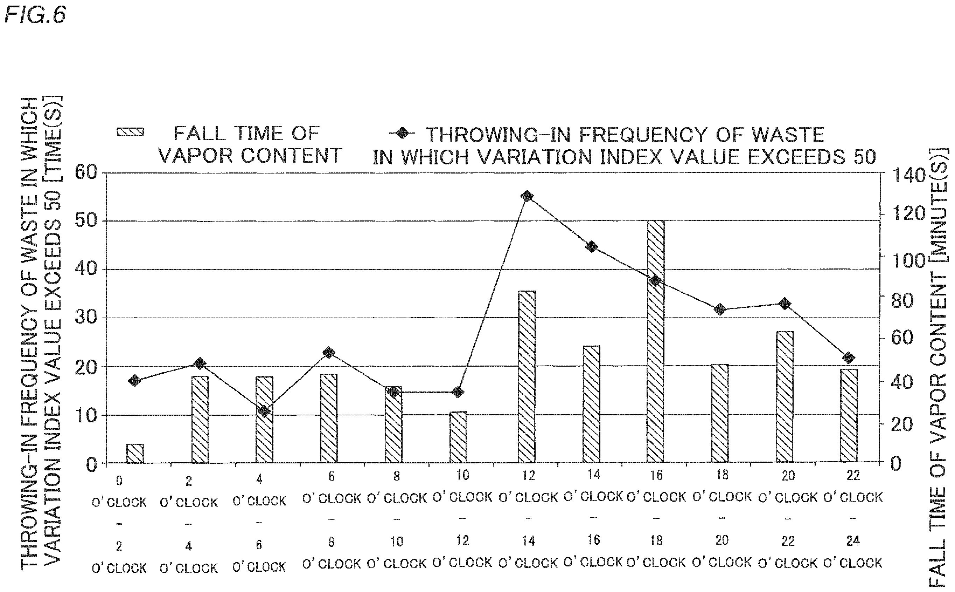

Here, Fig. 6 shows, for each time period, the throwing-in frequency T of the waste in which the variation index value V exceeds 50 (provisional index threshold) and the fall time D of the vapor content in the waste incineration facility 100. From these results, the correlation coefficient c in the case in which the provisional index threshold is 50 is found to be 0.712 with the formula (4). Even when the provisional index threshold is 10, 20, 30, 40, or 60, the correlation coefficient c is obtained. The obtained results are shown in Table 1 below.

Table 1

Then, a provisional index threshold of 50 having the largest correlation coefficient c is determined as the index threshold for the waste incineration facility 100 of Example of the first embodiment. It should be noted that the controller 6 may be able to automatically acquire the index threshold by programming or the like, or a result calculated by the operator may be stored in the storage 62e of the controller 6.

<Description of Control Process Flow>

A drive control flow of the crane 5 according to the first embodiment of the present invention is now described with reference to Figs. 1 to 5 and 7. This control flow is performed by the controller 6 (see Fig. 2).

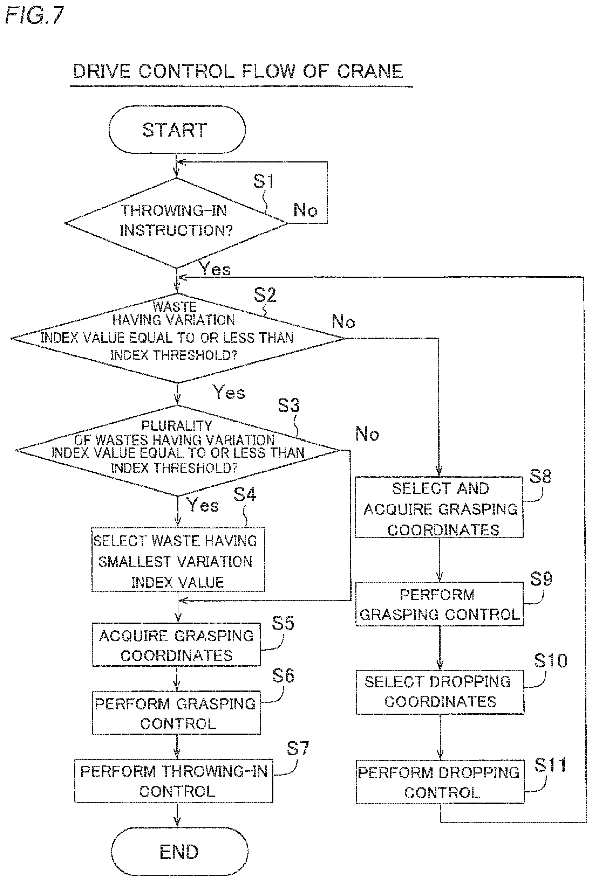

First, as shown in Fig. 7, in step S1, it is determined whether or not there is an instruction to throw in waste from the incinerator monitor 7 (see Fig. 2). At this time, when there is an instruction to throw in waste, the hopper 22 (see Fig. 3) into which the waste is thrown and the volume (weight) of the waste are specified. When there is an instruction to throw in waste, in step S2, the variation index value of the composition percentages of the waste types in the specific block(s) R is calculated based on the data on the composition percentages of the waste stored in the storage 62e, and it is determined whether or not the waste having a variation index value equal to or less than the index threshold is in the pit 21 (see Fig. 3). At this time, it may be determined whether or not the variation index value is equal to or less than the index threshold for each block R (see Fig. 4), or it may be determined whether or not the variation index value is equal to or less than the index threshold in a state in which a plurality of blocks R are combined.

When the waste having a variation index value equal to or less than the index threshold is in the pit 21, thrown-in waste is selected in step S3 and step S4. That is, in step S3, it is determined whether or not there are a plurality of wastes having a variation index value equal to or less than the index threshold in the pit 21. When there are not a plurality of wastes that can be thrown in (when there is only one), the waste is selected as the thrown-in waste, and the flow proceeds to step S5. When there are a plurality of wastes that can be thrown in, in step S4, waste having the smallest variation index value is selected as the thrown-in waste from the plurality of wastes that can be thrown in, and the flow proceeds to step S5.

In step S5, the coordinates (grasping coordinates) of the selected area P are calculated. In step S6, grasping control is performed on the crane 5 based on the calculated grasping coordinates. Specifically, as shown in Fig. 1, the bucket 53 is moved to the calculated grasping coordinates by the girder 51 and the transverse moving cart 52 of the crane 5, and the bucket 53 is moved downward in a direction Z2 by the winder 55. Then, the bucket 53 is opened and closed to selectively grasp the thrown-in waste, and the bucket 53 is pulled up in a direction Z1 by the winder 55.

Thereafter, in step S7, throwing-in control is performed on the crane 5 based on the coordinates (throwing-in coordinates) of the hopper 22 into which the waste is thrown. Specifically, the bucket 53 is moved to the throwing-in coordinates by the girder 51 and the transverse moving cart 52 of the crane 5, and the bucket 53 is opened. Thus, the thrown-in waste selected from the waste(s) in the pit 21 is selectively grasped and thrown into the waste incinerator 3 via the hopper 22. Then, this control is terminated.

When it is determined in step S2 that there is no waste having a variation index value equal to or less than the index threshold in the pit 21, waste is agitated such that waste in which the variation index value of the composition percentages of the waste types is equal to or less than the index threshold is created in step S8 to step S11. That is, in step S8, grasping coordinates are selected. At this time, waste to be grasped by the crane 5 is selected such that the composition percentages of the waste types of the agitated waste approach the composition percentages of the previously thrown-in waste. At this time, the waste to be grasped by the crane 5 is selected based on the composition percentages of the waste types for each block R stored in the storage 62e.

In step S9, similarly to step S6, grasping control is performed on the crane 5 based on the calculated grasping coordinates. Thereafter, in step S10, dropping coordinates are selected. Then, in step S11, dropping control is performed on the crane 5 based on the calculated dropping coordinates. At this time, the composition percentages of the waste, for example, are properly recalculated by the waste type percentage calculator 62b, and are stored in the storage 62e for each block R. Thereafter, the flow returns to step S2, agitation control of waste in step S8 to step S11 is continued until waste having a variation index value equal to or less than the index threshold is formed, and throwing-in control of waste in step S3 to step S7 is performed when waste that can be thrown in is formed.

<Effects of First Embodiment>

According to the first embodiment, the following effects are achieved.

According to the first embodiment, as described above, the waste crane operating device 4 includes the controller 6 that controls the crane 5 to selectively grasp the waste in which the variation index value of the composition percentages of the waste types with respect to the composition percentages of the waste types of the waste previously thrown into the waste incinerator 3 is equal to or less than the index threshold from the waste in the pit 21 and to throw, into the waste incinerator 3, the waste as the thrown-in waste to be thrown next into the waste incinerator 3. Accordingly, the thrown-in waste is selected from the waste in the pit 21 and grasped by the crane 5, and thus it is not necessary to provide a plurality of storage tanks that store waste separately from the pit 21. Consequently, an increase in the size of the waste incineration facility 100 and complexity of the waste incineration facility 100 can be significantly reduced or prevented.

According to the first embodiment, the controller 6 calculates the variation index value as an index of the variation amount of the composition percentages of the waste types based on the data on the composition percentages of the waste types stored in the storage 62e and controls the crane 5 to selectively grasp the waste having a variation index value equal to or less than the index threshold from the waste in the pit 21. Accordingly, a variation in the composition percentages of waste between the previously thrown-in waste and the thrown-in waste to be thrown in next can be reduced, and thus a large variation in the amount of heat generation of the thrown-in waste can be significantly reduced or prevented. Consequently, instability of waste burning based on a variation in the amount of heat generation can be significantly reduced or prevented. Therefore, in the waste crane operating device 4 according to the first embodiment, instability of waste burning based on a variation in the amount of heat generation can be significantly reduced or prevented while an increase in the size of the waste incineration facility 100 and complexity of the waste incineration facility 100 are significantly reduced or prevented.

According to the first embodiment, a pit 21 and a crane 5 provided in a general waste incineration facility can be used, and thus the waste crane operating device 4 can be applied to an existing waste incineration facility without providing a new waste incineration facility including a separate reservoir or the like.

According to the first embodiment, the controller 6 creates the waste in which the variation index value of the composition percentages of the waste types is equal to or less than the index threshold by controlling the crane 5 to agitate the waste in the pit 21 when there is no waste having a variation index value equal to or less than the index threshold. Accordingly, throwing of waste in which the variation index value of the composition percentages of the waste types exceeds the index threshold into the waste incinerator 3 can be reliably significantly reduced or prevented, and thus instability of waste burning based on a variation in the amount of heat generation can be reliably significantly reduced or prevented.

According to an aspect of the first embodiment not part of the invention, the controller 6 controls the crane 5 to selectively grasp the waste in which the variation index value of the composition percentages of the waste types is the smallest among a plurality of wastes in which the variation index value of the composition percentages of the waste types is equal to or less than the index threshold as the thrown-in waste to be thrown next into the waste incinerator 3 from the waste in the pit 21 when there are a plurality of wastes in which the variation index value of the composition percentages of the waste types is equal to or less than the index threshold. Accordingly, a variation in the amount of heat generation can be further significantly reduced or prevented, and thus instability of waste burning can be more reliably significantly reduced or prevented.

According to the first embodiment, the controller 6 controls the crane 5 to selectively grasp the waste in which the variation index value of the composition percentages of the waste types is equal to or less than the index threshold and the composition percentage of the special waste type is equal to or less than the special waste type threshold as the thrown-in waste to be thrown next into the waste incinerator 3 from the waste in the pit 21 when there is the special waste type having a large variation in the amount of heat generation during incineration in the waste in the pit 21. Accordingly, throwing of the waste in which the composition percentage of the special waste type is large into the waste incinerator 3 can be significantly reduced or prevented, and thus a large variation in the amount of heat generation due to the special waste type having a large variation in the amount of heat generation can be significantly reduced or prevented. Consequently, instability of waste burning can be reliably significantly reduced or prevented.

According to the first embodiment, the provisional index threshold (50) having the largest correlation coefficient is determined as the index threshold from the correlation between the degree of burning of the waste thrown into the waste incinerator 3 and the throwing-in frequency of the waste in which the variation index value of the composition percentages of the waste types is larger than the provisional index threshold into the waste incinerator 3. Furthermore, the controller 6 controls the crane 5 to selectively grasp the waste in which the variation index value of the composition percentages of the waste types is equal to or less than the index threshold from the waste in the pit 21 using the determined index threshold and to throw the waste as the thrown-in waste into the waste incinerator 3. Accordingly, an index threshold suitable for the waste incinerator 3 can be obtained from the correlation between the degree of burning of the waste thrown into the waste incinerator 3 and the throwing-in frequency of the waste in which the variation index value of the composition percentages of the waste types is larger than the provisional index threshold into the waste incinerator 3, and thus instability of waste burning based on a variation in the amount of heat generation in the waste incinerator 3 can be reliably significantly reduced or prevented.

[Second Embodiment]

A waste incineration facility 200 according to a second embodiment of the present disclosure is now described with reference to Figs. 2, 8, and 9. In the second embodiment, an example in which waste having the greatest agitation frequency is selectively grasped as thrown-in waste from wastes having a variation index value equal to or less than an index threshold in a waste crane operating device 104 of the waste incineration facility 200 unlike the aforementioned first embodiment is described. The same structures as those of the aforementioned first embodiment are denoted by the same reference numerals, and description thereof is omitted.

As shown in Fig. 2, the waste incineration facility 200 according to the second embodiment includes the waste crane operating device 104 instead of the waste crane operating device 4 according to the aforementioned first embodiment. The waste crane operating device 104 includes a crane 5 and a controller 106 including a crane operation controller 61 and a crane position determiner 162. In addition, the crane position determiner 162 includes a waste type percentage calculator 162b instead of the waste type percentage calculator 62b according to the first embodiment.

The waste type percentage calculator 162b has a function of calculating the composition percentages of waste types of waste for each block R. The waste type percentage calculator 162b calculates the variation index value of the waste for each block R based on data on the composition percentages of the waste types stored in a storage 62e and the above formula (2), and selects waste having a variation index value equal to or less than an index threshold and the greatest agitation frequency as thrown-in waste. That is, when there are a plurality of wastes having a variation index value equal to or less than the index threshold in a pit 21, the waste type percentage calculator 162b acquires an agitation frequency calculated by an agitation frequency calculator 62c from the storage 62e, and selects waste having the greatest agitation frequency as thrown-in waste.

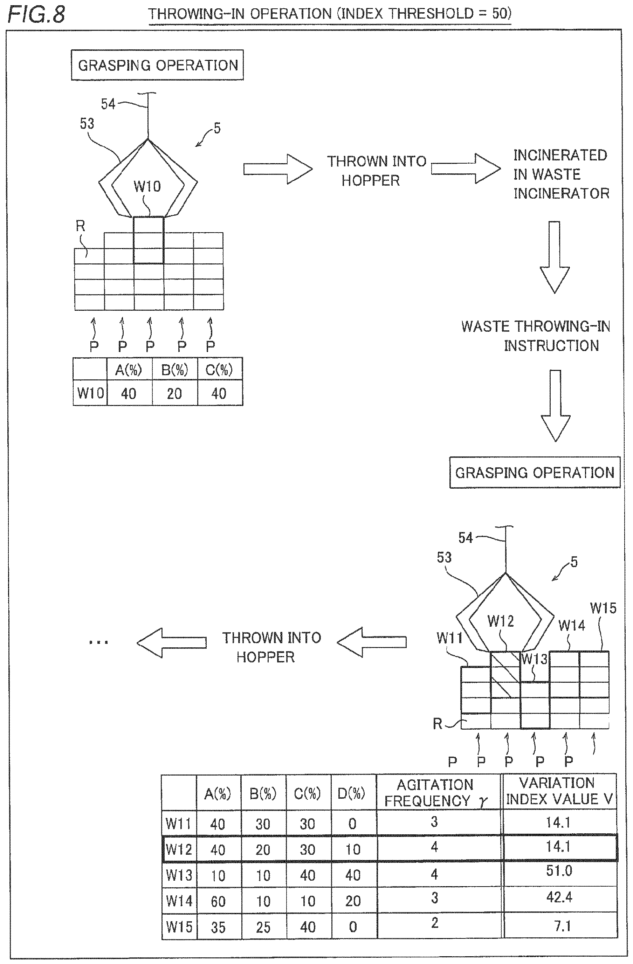

Here, as an example, as shown in Fig. 8, an example in which thrown-in waste of three blocks R in the same area P is selectively grasped at a time and thrown into a waste incinerator 3 is shown. At this time, an example of selecting thrown-in waste from one of five areas P is described.

Incidentally, waste W10 previously thrown into the waste incinerator 3 includes three waste types A, B, and C. Furthermore, the composition percentages of the waste types A, B, and C in the waste W10 are 40%, 20%, and 40%, respectively.

Here, thrown-in waste to be thrown next into the waste incinerator 3 is selected from the waste in the pit 21 based on a throwing-in instruction from an incinerator monitor 7. At this time, it is assumed that the incinerator monitor 7 gives an instruction to throw in waste of three blocks.

At this time, the waste type percentage calculator 162b selects the thrown-in waste to be thrown into the waste incinerator 3 from wastes W11 to W15 each including three stacked blocks R. Specifically, first, the waste type percentage calculator 162b calculates the composition percentages of the waste types A to D in the wastes W11 to W15 based on the composition percentages of the waste types for each block R stored in the storage 62e. At this time, it is assumed that the composition percentages of the waste types A, B, C, and D in the wastes W11 to W15 are composition percentages shown in Fig. 8. The waste type D is a waste type not included in the waste W10.

The waste type percentage calculator 162b selects the thrown-in waste to be thrown into the waste incinerator 3 from the wastes having a variation index value equal to or less than the index threshold. That is, in the example shown in Fig. 8, the index threshold is 50, and thus the waste type percentage calculator 162b selects the thrown-in waste from the wastes W11, W12, W14, and W15 having a variation index value V of 50 or less among the wastes W11 to W15.

The waste type percentage calculator 162b selects, as the thrown-in waste, waste having the greatest agitation frequency from the wastes having a variation index value equal to or less than the index threshold. A method for calculating the agitation frequency is the same as that in the aforementioned first embodiment. In other words, in the example shown in Fig. 8, the waste type percentage calculator 162b selects, as the thrown-in waste, the waste W12 having the greatest agitation frequency of "4" from the wastes W11, W12, W14, and W15. Then, the operation of the crane 5 is controlled by the crane operation controller 61, and the thrown-in waste (waste W12 in Fig. 8) in the selected area P is grasped by a bucket 53 of the crane 5 and thrown into the waste incinerator 3. The remaining structures of the second embodiment are similar to those of the aforementioned first embodiment.

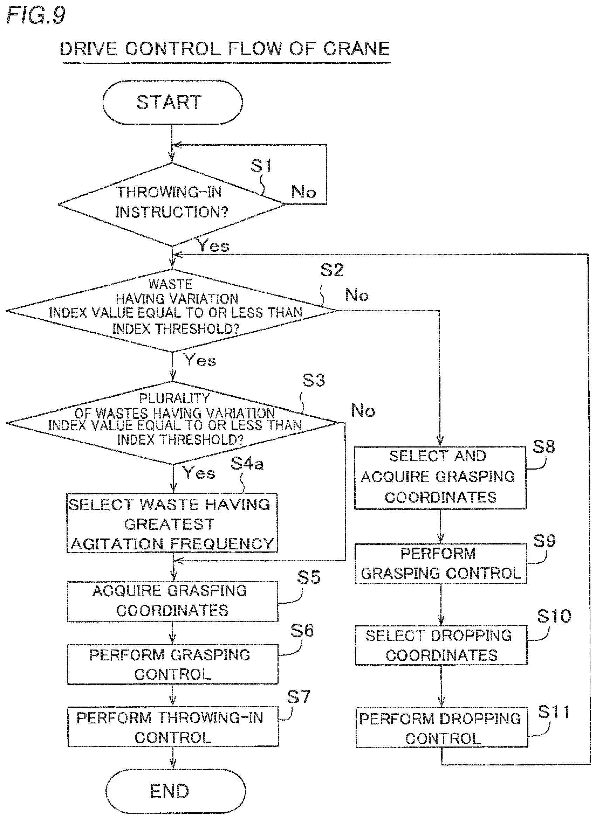

As shown in Fig. 9, a drive control flow of the crane 5 according to the second embodiment of the present disclosure is the same as the control flow according to the first embodiment except that the waste having the greatest agitation frequency is selected as the thrown-in waste from a plurality of wastes having a variation index value equal to or less than the index threshold in step S4a in place of step S4 in the control flow (see Fig. 7) according to the aforementioned first embodiment.

<Effects of Second Embodiment>

According to the second embodiment, the following effects are achieved.

According to the second embodiment, similarly to the first embodiment, the waste crane operating device 104 includes the controller 106 that calculates the variation index value as an index of the variation amount of the composition percentages of the waste types based on the data on the composition percentages of the waste types stored in the storage 62e, and controls the crane 5 to selectively grasp the waste having a variation index value equal to or less than the index threshold from the waste in the pit 21 and to throw, into the waste incinerator 3, the waste as the thrown-in waste to be thrown next into the waste incinerator 3. Accordingly, similarly to the first embodiment, instability of waste burning based on a variation in the amount of heat generation can be significantly reduced or prevented while an increase in the size of the waste incineration facility 200 and complexity of the waste incineration facility 200 are significantly reduced or prevented.

According to the second embodiment, as described above, when there are a plurality of wastes in which the variation index value of the composition percentages of the waste types is equal to or less than the index threshold, the controller 106 controls the crane 5 to selectively grasp, as the thrown-in waste to be thrown next into the waste incinerator 3, the waste having a great agitation frequency among the plurality of wastes in which the variation index value of the composition percentages of the waste types is equal to or less than the index threshold from the waste in the pit 21. Accordingly, the amount of heat generation can be brought close to the average value, and thus instability of waste burning can be easily significantly reduced or prevented. The remaining effects of the second embodiment are similar to those of the aforementioned first embodiment.

[Third Embodiment not part of the invention but discussed only for illustration]

A waste incineration facility 300 according to a third embodiment is now described with reference to Figs. 2, 10, and 11. In the third embodiment, an example in which waste having the smallest variation index value is selectively grasped as thrown-in waste without using an index threshold in a waste crane operating device 204 of the waste incineration facility 300 unlike the aforementioned first embodiment is described. The same structures as those of the aforementioned first embodiment are denoted by the same reference numerals, and description thereof is omitted.

As shown in Fig. 2, the waste incineration facility 300 according to the third embodiment includes the waste crane operating device 204 instead of the waste crane operating device 4 according to the aforementioned first embodiment. The waste crane operating device 204 includes a crane 5 and a controller 206 including a crane operation controller 61 and a crane position determiner 262. In addition, the crane position determiner 262 includes a waste type percentage calculator 262b instead of the waste type percentage calculator 62b according to the first embodiment.

The waste type percentage calculator 262b has a function of calculating the composition percentages of waste types of waste for each block R. The waste type percentage calculator 262b selects, as thrown-in waste, waste in which a variation in the composition percentages of the waste types with respect to the composition percentages of the waste types of waste previously thrown into a waste incinerator 3 is the smallest based on data on the composition percentages of waste types stored in a storage 62e. Specifically, the waste type percentage calculator 262b calculates a variation index value for each block R based on the data on the composition percentages of the waste types stored in the storage 62e and the above formula (2), and selects waste having the smallest variation index value as thrown-in waste.

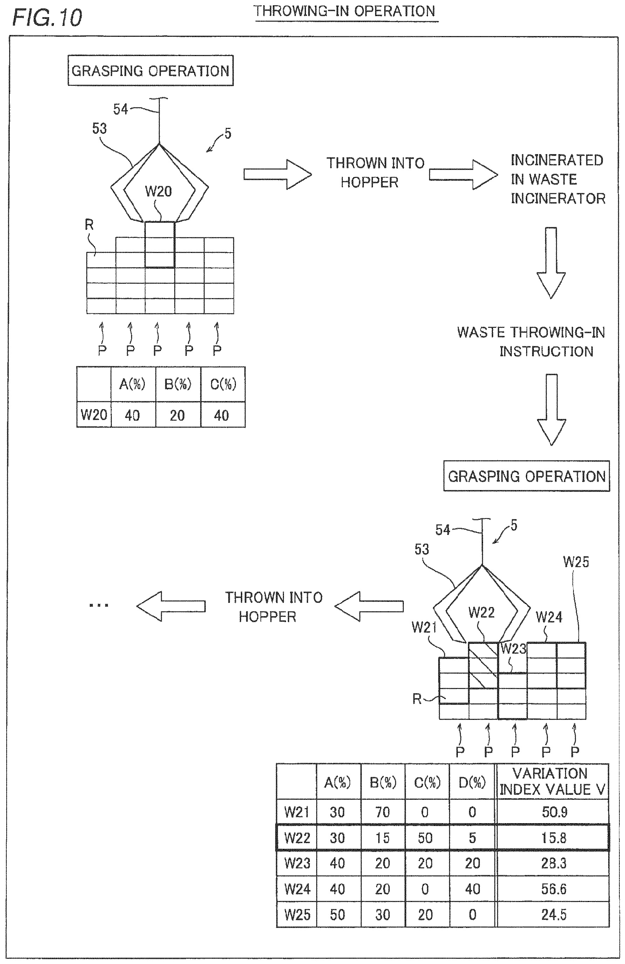

Here, as an example, as shown in Fig. 10, an example in which thrown-in waste of three blocks R in the same area P is selectively grasped at a time and thrown into the waste incinerator 3 is shown. At this time, an example of selecting thrown-in waste from one of five areas P is described.

Incidentally, waste W20 previously thrown into the waste incinerator 3 includes three waste types A, B, and C. Furthermore, the composition percentages of the waste types A, B, and C in the waste W20 are 40%, 20%, and 40%, respectively.

Here, thrown-in waste to be thrown next into the waste incinerator 3 is selected from waste in a pit 21 based on a throwing-in instruction from an incinerator monitor 7. At this time, it is assumed that the incinerator monitor 7 gives an instruction to throw in waste of three blocks.

At this time, the waste type percentage calculator 262b selects the thrown-in waste to be thrown into the waste incinerator 3 from wastes W21 to W25 each including three stacked blocks R. Specifically, first, the waste type percentage calculator 262b calculates the composition percentages of the waste types A to D in the wastes W21 to W25 based on the composition percentages of the waste types for each block R stored in the storage 62e. At this time, it is assumed that the composition percentages of the waste types A, B, C, and D in the wastes W21 to W25 are composition percentages shown in Fig. 10. The waste type D is a waste type not included in the waste W20.

The waste type percentage calculator 262b selects the waste having the smallest variation index value as the thrown-in waste to be thrown into the waste incinerator 3. That is, in the example shown in Fig. 10, the waste type percentage calculator 262b selects the waste W22 having the smallest variation index value V (= 15.8) as the thrown-in waste from the wastes W21 to W25. Then, the operation of the crane 5 is controlled by the crane operation controller 61, and the thrown-in waste (waste W22 in Fig. 10) in the selected area P is grasped by a bucket 53 of the crane 5 and thrown into the waste incinerator 3.

According to the third embodiment, unlike the aforementioned first embodiment, an index threshold is not used when the thrown-in waste is selected, and thus waste in which a variation in the waste type is somewhat large (the waste having a variation index value that exceeds an index threshold of 50 in the aforementioned first embodiment, for example) may be selected as the thrown-in waste in some cases. However, the waste having the smallest variation index value is selected as the thrown-in waste such that it is possible to prevent other waste in which a variation in the waste type is larger from being thrown into the waste incinerator 3, and thus a large variation in the amount of heat generation of the thrown-in waste can be significantly reduced or prevented. Furthermore, according to the third embodiment, it is not necessary to acquire an index threshold, and thus the actual operation of the waste incineration facility 300 can be performed at an early stage. The remaining structures of the third embodiment are similar to those of the aforementioned first embodiment.

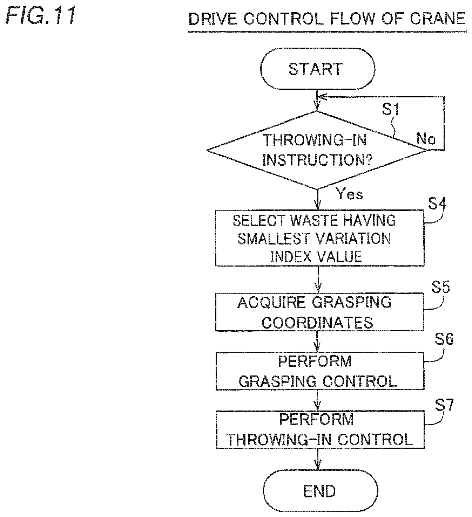

As shown in Fig. 11, a drive control flow of the crane 5 according to the third embodiment is the same as the control flow according to the aforementioned first embodiment except that control in step S2 and S3 for performing comparison with the index threshold and control in step S8 to step S11 for agitating the waste when there is no waste having a variation index value equal to or less than the index threshold in the control flow (see Fig. 7) according to the aforementioned first embodiment are not performed.

<Effects of Third Embodiment>

According to the third embodiment, the following effects are achieved.

According to the third embodiment, the controller 206 that controls the crane 5 to selectively grasp the waste in which a variation in the composition percentages of the waste types with respect to the composition percentages of the waste types of the waste previously thrown into the waste incinerator 3 is the smallest based on the data on the composition percentages of the waste types stored in the storage 62e from the waste in the pit 21 and to throw, into the waste incinerator 3, the waste as the thrown-in waste to be thrown next into the waste incinerator 3 is provided. Accordingly, an increase in the size of the waste incineration facility 300 and complexity of the waste incineration facility 300 can be significantly reduced or prevented.

According to the third embodiment, the controller 206 controls the crane 5 to selectively grasp the waste in which a variation in the composition percentages of the waste types is the smallest from the waste in the pit 21 such that a large variation in the amount of heat generation of the thrown-in waste can be significantly reduced or prevented as compared with the case in which other waste in which a variation in the waste type is larger is thrown into the waste incinerator 3. Accordingly, instability of waste burning based on a variation in the amount of heat generation can be significantly reduced or prevented. Therefore, with the waste crane operating device 204, instability of waste burning based on a variation in the amount of heat generation can be significantly reduced or prevented while an increase in the size of the waste incineration facility 300 and complexity of the waste incineration facility 300 are significantly reduced or prevented.

[Modified Examples]

The embodiments and Example disclosed this time must be considered as illustrative in all points and not restrictive. The scope of the present invention is not shown by the above description of the embodiments and Example but by the scope of claims for patent, and all modifications (modified examples) within the meaning and scope equivalent to the scope of claims for patent are further included.

For example, while the example in which the variation index value is calculated using the formula (2) has been shown in each of the aforementioned first to third embodiments, the present invention is not restricted to this. According to the present invention, the variation index value may be obtained using a formula different from the formula (2) as long as an index, the value of which increases as a variation in waste increases, is used. For example, when the number of waste types is set to n, the composition percentage(s) of the waste type(s) in the previously thrown-in waste is set to xk ($1 \leqq k \leqq n$) (%), and the composition percentage(s) of the waste type(s) of the waste at the specific position in the pit is set to yk ($1 \leqq k \leqq n$) (%), the variation index value V for the waste at the specific position may be calculated with the following formula (5). At this time, it is preferable to obtain an index threshold corresponding to the variation index value V calculated with the formula (5) for each formula by the method for acquiring the index threshold described in the aforementioned first embodiment, but an estimated value may be used. For example, in the formula (5), "50", which is the index threshold of Example of the first embodiment, may be used.

[Mathematical Formula 5]

$$V = \sum |yk - xk| \quad (1 \leqq k \leqq n) \quad \cdots (5)$$

While the example in which the waste in which the composition percentage of the special waste type exceeds the special waste type threshold is not selected as the thrown-in waste has been shown in the aforementioned first embodiment, the present invention is not restricted to this. According to the present invention, when the variation index value of certain waste is equal to or less than the index threshold, the waste may be selectable as the thrown-in waste irrespective of the value of the composition percentage of the special waste type in the waste. Furthermore, in addition to the essential condition that the variation index value is equal to or less than the index threshold and the arbitrary condition that the composition percentage of the special waste type is equal to or less than the special waste type threshold, another arbitrary condition may be set as a condition for selecting the thrown-in waste. For example, in addition to the essential condition that the variation index value is equal to or less than the index threshold, the condition that the composition percentage of a new waste type is equal to or less than a new waste type threshold may be set.

While the example in which the index threshold is acquired based on the degree of burning of the waste thrown into the waste incinerator 3 and the throwing-in frequency of the waste that satisfies the throwing-in conditions (the throwing-in frequency of the waste in which the variation index value of the composition percentages of the waste types with respect to the composition percentage of the waste types of the previously thrown-in waste is larger than the provisional index threshold) has been shown in each of the aforementioned first and second embodiments, the present invention is not restricted to this. The degree of burning of the waste thrown into the waste incinerator may be obtained using a parameter other than the fall time of the vapor content in the steam turbine when the waste thrown into the waste incinerator is incinerated. For example, the degree of burning of the waste thrown into the waste incinerator may be obtained using a parameter such as a temperature change in the combustion chamber of the waste incinerator. Alternatively, the index threshold may be acquired in advance by estimating, in advance, the correlation between the degree of burning of the waste and the provisional index threshold from an incineration capacity such as the size of the waste incinerator, the average agitation frequency in the pit, etc. prior to the operation of the waste incineration facility.

While the example in which the index threshold is acquired using the correlation coefficient c calculated from the above formula (4) has been shown in each of the aforementioned first and second embodiments, the present invention is not restricted to this. According to the present invention, the index threshold may be acquired by a method other than using the correlation coefficient.

While the example in which the fall time y of the vapor content is acquired as the length of time in which the difference $\Delta V$ (= SV - PV) between the set value SV and the measured value PV of the vapor content exceeds 10% of the set value SV has been shown in each of the aforementioned first and second embodiments, the present invention is not restricted to this. For example, the fall time of the vapor content may be acquired as the length of time in which the difference $\Delta V$ between the set value SV and the measured value PV of the vapor content exceeds 15% of the set value SV, or the length of time in which the measured value PV of the vapor content is less than 90% of the set value SV.

While the example in which the waste in each area P is taken as a stack of rectangular parallelepiped uniform objects (blocks R) each having a volume of $0.5 \times S \, (m^3)$ in a virtualized state has been shown in each of the aforementioned first to third embodiments, the present invention is not restricted to this. According to the present invention, the waste in each area may be taken by virtualization different from the virtualization in which the waste in each area is taken as a stack of rectangular parallelepiped uniform objects.

While the example in which at the time of throwing in or agitating the waste, the three blocks R in the selected area P are grasped by the crane 5 has been shown in each of the aforementioned first to third embodiments, the present invention is not restricted to this. According to the present invention, the number of blocks to be grasped in the selected area is not limited to three at the time of throwing in or agitating the waste. The number of blocks to be grasped can be calculated from the volume of grasped waste (the height of grasped waste).

While the example in which 50, which is the provisional index threshold having the largest correlation coefficient c, is set as the index threshold for the waste incineration facility 100 of Example of the first embodiment has been shown in the modified example of the aforementioned first embodiment, the present invention is not restricted to this. According to the present invention, any of provisional index thresholds in which the correlation coefficient is equal to or more than a specific value may be used as the index threshold for the waste incineration facility. For example, when the correlation coefficient is 0.7 or more, the correlation is considered to be sufficiently high, and thus any of provisional index thresholds in which the correlation coefficient is 0.7 or more may be set as the index threshold for the waste incineration facility. That is, in the case of Example of the aforementioned first embodiment, in addition to 50, 40 having a correlation coefficient c of 0.7 or more may be used as the index threshold based on Table 1.

According to the present invention, the structure of the aforementioned first and third embodiment may be properly selected according to the operational status of the waste incineration facility. For example, in the operation period in which the waste incineration facility cannot afford to obtain the index threshold at the beginning of the operation of the waste incineration facility, the waste incineration facility may be operated with the structure of the aforementioned third embodiment in which it is not necessary to obtain the index threshold, and in the operation period after the index threshold is obtained, the waste incineration facility may be operated with the structure of the aforementioned first or second embodiment using the index threshold.

While the process operations performed by the controller are described using a flowchart in a flow-driven manner in which processes are performed in order along a process flow for the convenience of illustration in each of the aforementioned first and third embodiments, the present invention is not restricted to this. According to the present invention, the process operations performed by the controller may be performed in an event-driven manner in which the processes are performed on an event basis. In this case, the process operations performed by the controller may be performed in a complete event-driven manner or in a combination of an event-driven manner and a flow-driven manner.

Description of Reference Numerals

| | |
|---|---|
| 3: | waste incinerator |
| 4, 104, 204: | waste crane operating device |
| 5: | crane |
| 6, 106, 206: | controller |
| 21: | pit |
| 62e: | storage |

**Claims**

1.  A waste crane operating device (4) comprising:

    a crane (5) that agitates the waste in a pit (21), and throws waste in the pit (21) into a waste incinerator (3);
    a storage (62e) that stores data on a composition percentage of waste types that constitute a block (R) of the waste, for each block (R) at a plurality of positions in the pit (21), wherein the blocks are rectangular parallelepiped uniform objects; and

a controller (6) that calculates a variation index value as an index of a variation amount of the composition percentage of the waste types with respect to the composition percentage of the waste types of waste (W0) previously thrown into the waste incinerator (3), for each of a plurality of waste parts (W1-W5) each including one or more of the blocks (R), based on the data on the composition percentage of the waste types stored in the storage (62e), and controls the crane (5) to selectively grasp a first waste part in which the calculated variation index value is equal to or less than an index threshold from the plurality of waste parts in the pit (21), and to throw, into the waste incinerator (3), the first waste part as thrown-in waste to be thrown next into the waste incinerator (3),

wherein the controller (6) is configured to virtually partition the pit (21) into a plurality of areas (P) in an X-Y plane, the pit (21) has a rectangular parallelepiped box shape that extends in the X-Y plane, each area (P) is partitioned so as to have an area (S) enough for a bucket (53) of the crane to grasp at a time,

the waste in each area (P) is taken as a stack of blocks (R) each having a height of about 0.5 m in a virtualized state,

the controller (6) includes a crane position determiner (62), which includes a waste type percentage calculator (62b) configured to calculate the composition percentage of waste types at a specific position in the pit (21) and an agitation frequency calculator (62c) configured to calculate a frequency of waste agitation per block (R), wherein the specific position in the pit (21) indicates a specific height position of a block (R) in a specific area (P) of the pit (21),

the crane position determiner (62) is configured to determine, for each block (R) in the area (P), waste types that constitue the waste of the block (R), the composition percentage of each waste type, and the agitation frequency of the waste of the block (R),

the waste type percentage calculator (62b) calculates the composition percentage of waste for each block (R) every time the waste in the pit (21) is agitated, and

wherein the controller (6) controls the crane (5) to selectively grasp a second waste part having a great agitation frequency among a plurality of the first waste parts (W11, W12, W14, W15) in the pit (21) and to throw the second waste part (W12) as the thrown-in waste into the waste incinerator (3) when there are the plurality of first waste parts in the pit (21).

2. The waste crane operating device according to claim 1, wherein the controller (6) creates the first waste part in which the variation index value of the composition percentage of the waste types is equal to or less than the index threshold by controlling the crane (5) to agitate the waste in the pit (21) when there is not the first waste part in the pit (21).

3. The waste crane operating device according to claim 1 or 2, wherein the controller (6) controls the crane (5) to selectively grasp the first waste part (W4) in which the variation index value of the composition percentage of the waste types is equal to or less than the index threshold and a composition percentage of a special waste type is equal to or less than a special waste type threshold from the plurality of waste parts in the pit (21) and to throw the first waste part as the thrown-in waste into the waste incinerator (3) when the blocks constituting the plurality of waste parts (W1-W5) include a waste of the special waste type (C) having a large variation in an amount of heat generation during incineration in the waste in the pit (21), wherein the waste type percentage calculator (62b) selects the first waste part in which the composition percentage of the special waste type having the large variation in the amount of heat generation during incineration is equal to or less than the special waste type threshold as the thrown-in waste.

4. The waste crane operating device according to claim 1 or 2, wherein the controller (6) controls the crane (5) to selectively grasp the first waste part from the plurality of waste parts in the pit (21) using the index threshold obtained from a correlation between a throwing-in frequency of a prescribed waste in which the variation index value of the composition percentage of the waste types is larger than a provisional index threshold into the waste incinerator (3) and a degree of burning of the prescribed waste thrown into the waste incinerator (3), and to throw the first waste part as the thrown-in waste into the waste incinerator (3).

5. A waste crane operating method comprising:

calculating, using a controller (6), a variation index value as an index of a variation amount of composition percentages of a plurality of waste types that constitute a block (R) of waste in a pit (21) with respect to the composition percentages of the plurality of waste types of waste previously thrown into a waste incinerator (3), for each of a plurality of waste parts (W1-W5) each including one or more of the blocks (R), based on data on composition percentages of waste types stored for each block (R) in a storage (62e), wherein the blocks are rectangular parallelepiped uniform objects;

selecting a first waste part in which the variation index value is equal to or less than an index threshold as thrown-in waste to be thrown next into the waste incinerator (3) from the plurality of waste parts; and

selectively grasping the selected thrown-in waste from the pit (21) and throwing the thrown-in waste into the waste incinerator (3) with a crane (5), the crane (5) agitates the waste in the pit (21),

wherein the controller (6) is configured to virtually partition the pit (21) into a plurality of areas (P) in an X-Y plane, the pit (21) has a rectangular parallelepiped box shape that extends in the X-Y plane, each area (P) is partitioned so as to have an area (S) enough for a bucket (53) of the crane to grasp at a time,

the waste in each area (P) is taken as a stack of blocks (R) each having a height of about 0.5 m in a virtualized state, the controller (6) includes a crane position determiner (62), which includes a waste type percentage calculator (62b) configured to calculate the composition percentage of waste types at a specific position in the pit (21) and an agitation frequency calculator (62c) configured to calculate a frequency of waste agitation per block (R), wherein the specific position in the pit (21) indicates a specific height position of a block (R) in a specific area (P) of the pit (21),

the crane position determiner (62) is configured to determine, for each block (R) in the area (P), waste types that constitue the waste of the block (R), the composition percentage of each waste type, and the agitation frequency of the waste of the block (R),

the waste type percentage calculator (62b) calculates the composition percentage of waste for each block (R) every time the waste in the pit (21) is agitated, and

wherein the controller (6) controls the crane (5) to selectively grasp a second waste part having a great agitation frequency among a plurality of the first waste parts (W11, W12, W14, W15) in the pit (21) and to throw the second waste part (W12) as the thrown-in waste into the waste incinerator (3) when there are the plurality of first waste parts in the pit (21).

**Patentansprüche**

1. Vorrichtung (4) zum Betreiben eines Abfallkrans, die umfasst:

einen Kran (5), der Abfall in einer Grube (21) bewegt und den Abfall in der Grube (21) in eine Abfallverbrennungsanlage (3) wirft;

einen Speicher (62e), der Daten über einen prozentualen Zusammensetzungsanteil von Abfallarten, die einen Block (R) des Abfalls bilden, für jeden Block (R) an einer Vielzahl von Positionen in der Grube (21) speichert, wobei die Blöcke rechteckige parallelepipedische gleichförmige Objekt esind; sowie

eine Steuerungseinrichtung (6), die einen Variations-Kennwert als eine Kenngröße eines Variations-Betrages des prozentualen Zusammensetzungsanteils der Abfallarten in Bezug auf den Zusammensetzungsanteil der Abfallarten von zuvor in die Abfallverbrennungsanlage (3) geworfenem Abfall (W0) für jeden einer Vielzahl von Abfallteilen (W1-W5), die jeweils einen oder mehrere der Blöcke (R) enthalten, auf Basis der Daten über den prozentualen Zusammensetzungsanteil der Abfallarten berechnet, die in dem Speicher (62e) gespeichert sind, und den Kran (5) so steuert, dass er von der Vielzahl von Abfallteilen in der Grube (21) selektiv einen ersten Abfallteil greift, bei dem der berechnete Variations-Kennwert auf oder unter einem Kenngrößen-Schwellenwert liegt, und den ersten Abfallteil als einzuwerfenden Abfall, der als nächstes in die Abfallverbrennungsanlage (3) zu werfen ist, in die Abfallverbrennungsanlage (3) wirft;

wobei die Steuerungseinrichtung (6) konfiguriert ist zum virtuellen Unterteilen der Grube (21) in eine Vielzahl von Bereichen (P) in einer X-Y-Ebene, wobei die Grube (21) eine rechteckige parallelepipedische Kastenform, die sich in der X-Y-Ebene erstreckt, aufweist, wobei jeder Bereich (P) derart unterteilt ist, dass er eine Fläche (S) aufweist, die für jeweils ein Greifen durch eine Schaufel (53) des Krans ausreicht;

wobei Abfall in jedem Bereich (P) als ein Stapel von Blöcken (R) mit jeweils einer Höhe von ungefähr 0,5 m in einem virtualisierten Zustand genommen wird;

wobei die Steuerungseinrichtung (6) einen Kranpositionsbestimmer (62) enthält, der einen Abfallartprozentsatz-Berechner (62b), der konfiguriert ist zum Berechnen des prozentualen Zusammensetzungsanteils von Abfallarten an einer spezifischen Position in der Grube (21), und einen Bewegungsfrequenz-Berechner (62c), der konfiguriert ist zum Berechnen der Bewegungsfrequenz des Abfalls pro Block (R), umfasst, wobei die spezifische Position in der Grube (21) eine spezifische Höhenposition eines Blocks (R) in einem spezifischen Bereich (P) der Grube (21) angibt;

wobei der Kranpositionsbestimmer (62) konfiguriert ist zum Bestimmen, für jeden Block (R) in dem Bereich (P), von Abfallarten, die den Abfall des Blocks (R) bilden, des prozentualen Zusammensetzungsanteils jeder Abfallart und der Bewegungsfrequenz des Abfalls des Blocks (R);

wobei der Abfallartprozentsatz-Berechner (62b) die prozentuale Zusammensetzung des Abfalls für jeden Block (R) jedes Mal, wenn der Abfall in der Grube (21) bewegt wird, berechnet; und

wobei die Steuerungseinrichtung (6) den Kran (5) so steuert, dass er selektiv einen zweiten Abfallteil mit einer großen Bewegungsfrequenz innerhalb einer Vielzahl der ersten Abfallteile (W11, W12, W14, W15) in der Grube (21) greift und die zweite Abfallart (W12) als einzuwerfenden Abfall in die Abfallverbrennungsanlage (3) wirft, wenn sich die Vielzahl von ersten Abfallteilen in der Grube (21) befinden.

2. Vorrichtung zum Betreiben eines Abfallkrans nach Anspruch 1, wobei die Steuerungseinrichtung (6) den ersten Abfallteil erzeugt, bei dem der Variations-Kennwert des prozentualen Zusammensetzungsanteils der Abfallarten auf oder unter dem Kenngrößen-Schwellenwert liegt, indem sie den Kran (5) so steuert, dass er den Abfall in der Grube (21) bewegt, wenn sich der erste Abfallteil nicht in der Grube (21) befindet.

3. Vorrichtung zum Betreiben eines Abfallkrans nach Anspruch 1 oder 2, wobei die Steuerungseinrichtung (6) den Kran (5) so steuert, dass er von der Vielzahl von Abfallteilen in der Grube (21) selektiv den ersten Abfallteil (W4) greift, bei dem der Variations-Kennwert des prozentualen Zusammensetzungsanteils der Abfallarten auf oder unter dem Kenngrößen-Schwellenwert legt und ein prozentualer Zusammensetzungsanteil einer Sonderabfallart auf oder unter einem Sonderabfallart-Schwellenwert liegt, und den ersten Abfallteil als den einzuwerfenden Abfall in die Abfallverbrennungsanlage (3) wirft, wenn die Blöcke, die die Vielzahl von Abfallteilen (W1-W5) bilden, einen Abfall der Sonderabfallart (C) enthalten, der eine große Variation hinsichtlich eines Betrages von Wärmeerzeugung während der Verbrennung in dem Abfall in der Grube (21) aufweist, wobei der Abfallartprozentsatz-Berechner (62b) den ersten Abfallteil, bei dem der prozentuale Zusammensetzungsanteil der Sonderabfallart mit der großen Variation hinsichtlich des Betrags von Wärmeerzeugung während der Verbrennung auf oder unter dem Sonderabfallart-Schwellenwert liegt, als den einzuwerfenden Abfall auswählt.

4. Vorrichtung zum Betreiben eines Abfallkrans nach Anspruch 1 oder 2, wobei die Steuerungseinrichtung (6) den Kran (5) so steuert, dass er von der Vielzahl von Abfallteilen in der Grube (21) selektiv den ersten Abfallteil unter Verwendung des Kenngrößen-Schwellenwertes greift, der anhand einer Korrelation zwischen einer Häufigkeit des Einwerfens eines vorgeschriebenen Abfalls, bei dem der Variations-Kennwert des prozentualen Zusammensetzungsanteils der Abfallarten über einem vorläufigen Kenngrößen-Schwellenwert liegt, in die Abfallverbrennungsanlage (3) und eines Verbrennungsgrades des vorgeschriebenen, in die Abfallverbrennungsanlage (3) eingeworfenen Abfalls ermittelt wird, und den ersten Abfallteil als den einzuwerfenden Abfall in die Abfallverbrennungsanlage (3) wirft.

5. Verfahren zum Betreiben eines Abfallkrans, umfassend:

Berechnen, unter Verwendung einer Steuerungseinrichtung (6), eines Variations-Kennwertes als eine Kenngröße eines Variations-Betrages prozentualer Zusammensetzungsanteile einer Vielzahl von Abfallarten, die einen Block (R) von Abfall in einer Grube (21) bilden, in Bezug auf die prozentualen Zusammensetzungsanteile der Vielzahl von Abfallarten zuvor in eine Abfallverbrennungsanlage (3) geworfenen Abfalls für jeden einer Vielzahl von Abfallteilen (W1-W5), die jeweils einen oder mehrere der Blöcke (R) enthalten, auf Basis von Daten über prozentuale Zusammensetzungsanteile von Abfallarten, die für jeden Block (R) in einem Speicher (62e) gespeichert sind, wobei die Blöcke rechteckige parallelepipedische gleichförmige Objekte sind;

Auswählen eines ersten Abfallteils, bei dem der Variations-Kennwert auf oder unter einem Kenngrößen-Schwellenwert liegt, als einzuwerfenden Abfall, der als nächstes in die Abfallverbrennungsanlage (3) einzuwerfen ist, aus der Vielzahl von Abfallteilen; sowie

selektives Greifen des ausgewählten einzuwerfenden Abfalls aus der Grube (21) und Einwerfen des einzuwerfenden Abfalls in die Abfallverbrennungsanlage (3) mit einem Kran (5), wobei der Kran (5) den Abfall in der Grube (21) bewegt;

wobei die Steuerungseinrichtung (6) konfiguriert ist zum virtuellen Unterteilen der Grube (21) in eine Vielzahl von Bereichen (P) in einer X-Y-Ebene, wobei die Grube (21) eine rechteckige parallelepipedische Kastenform, die sich in der X-Y-Ebene erstreckt, aufweist, wobei jeder Bereich (P) derart unterteilt ist, dass er eine Fläche (S) aufweist, die für jeweils ein Greifen durch eine Schaufel (53) des Krans ausreicht;

wobei Abfall in jedem Bereich (P) als ein Stapel von Blöcken (R) mit jeweils einer Höhe von ungefähr 0,5 m in einem virtualisierten Zustand genommen wird;

wobei die Steuerungseinrichtung (6) einen Kranpositionsbestimmer (62) enthält, der einen Abfallartprozentsatz-Berechner (62b), der konfiguriert ist zum Berechnen des prozentualen Zusammensetzungsanteils von Abfallarten an einer spezifischen Position in der Grube (21), und einen Bewegungsfrequenz-Berechner (62c), der konfiguriert ist zum Berechnen der Bewegungsfrequenz des Abfalls pro Block (R), umfasst, wobei die spezifische Position in der Grube (21) eine spezifische Höhenposition eines Blocks (R) in einem spezifischen Bereich (P) der Grube (21) angibt;

wobei der Kranpositionsbestimmer (62) konfiguriert ist zum Bestimmen, für jeden Block (R) in dem Bereich (P), von Abfallarten, die den Abfall des Blocks (R) bilden, des prozentualen Zusammensetzungsanteils jeder Abfallart und der Bewegungsfrequenz des Abfalls des Blocks (R);

wobei der Abfallartprozentsatz-Berechner (62b) die prozentuale Zusammensetzung des Abfalls für jeden Block (R) jedes Mal, wenn der Abfall in der Grube (21) bewegt wird, berechnet; und

wobei die Steuerungseinrichtung (6) den Kran (5) so steuert, dass er selektiv einen zweiten Abfallteil mit einer großen Bewegungsfrequenz innerhalb der Vielzahl der ersten Abfallteile (W11, W12, W14, W15) in der Grube (21) greift und die zweite Abfallart (W12) als einzuwerfenden Abfall in die Abfallverbrennungsanlage (3) wirft, wenn sich die Vielzahl von ersten Abfallteilen in der Grube (21) befinden.

## Revendications

1. Dispositif d'actionnement de grue à déchets (4) comprenant :

    une grue (5) qui agite les déchets dans une fosse (21), et qui déverse les déchets dans la fosse (21) dans un incinérateur de déchets (3) ;

    un dispositif de stockage (62e) qui stocke des données sur un pourcentage de composition de types de déchets qui constituent un bloc (R) des déchets, pour chaque bloc (R) à une pluralité de positions dans la fosse (21), où les blocs sont des objets uniformes parallélépipédiques rectangulaires ; et

    un dispositif de commande (6) qui calcule une valeur d'indice de variation servant d'indice d'une quantité de variation du pourcentage de composition des types de déchets par rapport au pourcentage de composition des types de déchets de déchets (W0) précédemment déversés dans l'incinérateur de déchets (3), pour chacune d'une pluralité de parties de déchets (W1-W5) comportant chacune un ou plusieurs des blocs (R), sur la base des données sur le pourcentage de composition des types de déchets stockées dans le dispositif de stockage (62e), et commande la grue (5) pour saisir sélectivement une première partie de déchets dans laquelle la valeur d'indice de variation calculée est inférieure ou égale à un seuil d'indice parmi la pluralité de parties de déchets dans la fosse (21), et pour déverser, dans l'incinérateur de déchets (3), la première partie de déchets en tant que déchets déversés à déverser par la suite dans l'incinérateur de déchets (3),

    dans lequel le dispositif de commande (6) est configuré pour diviser virtuellement la fosse (21) en une pluralité de zones (P) dans un plan X-Y, la fosse (21) a une forme de boîte parallélépipédique rectangulaire qui s'étend dans le plan X-Y, chaque zone (P) est divisée de manière à avoir une zone (S) suffisante pour qu'une benne (53) de la grue puisse la saisir à la fois,

    les déchets dans chaque zone (P) sont pris sous forme d'un empilement de blocs (R) ayant chacun une hauteur d'environ 0,5 m dans un état virtualisé,

    le dispositif de commande (6) comprend un dispositif de détermination de position de grue (62), qui comporte un calculateur de pourcentage de types de déchets (62b) configuré pour calculer le pourcentage de composition de types de déchets à une position spécifique dans la fosse (21) et un calculateur de fréquence d'agitation (62c) configuré pour calculer une fréquence d'agitation de déchets par bloc (R), où la position spécifique dans la fosse (21) indique une position en hauteur spécifique d'un bloc (R) dans une zone spécifique (P) de la fosse (21),

    le dispositif de détermination de position de grue (62) est configuré pour déterminer, pour chaque bloc (R) dans la zone (P), les types de déchets qui constituent les déchets du bloc (R), le pourcentage de composition de chaque type de déchets et la fréquence d'agitation des déchets du bloc (R),

    le calculateur de pourcentage de types de déchets (62b) calcule le pourcentage de composition des déchets pour chaque bloc (R) chaque fois que les déchets dans la fosse (21) sont agités, et

    dans lequel le dispositif de commande (6) commande la grue (5) pour saisir sélectivement une deuxième partie de déchets ayant une grande fréquence d'agitation parmi une pluralité des premières parties de déchets (W11, W12, W14, W15) dans la fosse (21) et pour déverser la deuxième partie de déchets (W12) en tant que déchets déversés dans l'incinérateur de déchets (3) lorsque la pluralité de premières parties de déchets existe dans la fosse (21).

2. Dispositif d'actionnement de grue à déchets selon la revendication 1, dans lequel le dispositif de commande (6) crée la première partie de déchets dans laquelle la valeur d'indice de variation du pourcentage de composition des types de déchets est inférieure ou égale au seuil d'indice en commandant la grue (5) pour agiter les déchets dans la fosse (21) lorsqu'il n'existe pas de première partie de déchets dans la fosse (21).

3. Dispositif d'actionnement de grue à déchets selon la revendication 1 ou 2, dans lequel le dispositif de commande (6) commande la grue (5) pour saisir sélectivement la première partie de déchets (W4) dans laquelle la valeur d'indice de variation du pourcentage de composition des types de déchets est inférieure ou égale au seuil d'indice et un pourcentage de composition d'un type de déchets spécial est inférieur ou égal à un seuil de type de déchets spécial parmi la pluralité de parties de déchets dans la fosse (21) et pour déverser la première partie de déchets en tant que déchets déversés dans l'incinérateur de déchets (3) lorsque les blocs constituant la pluralité de parties de déchets (W1-W5) comportent des déchets du type de déchets spécial (C) présentant une grande variation de la quantité de génération de chaleur pendant l'incinération des déchets dans la fosse (21), où le calculateur de pourcentage de type de déchets (62b) sélectionne la première partie de déchets dans laquelle le pourcentage de composition du type de déchets spécial présentant la grande variation dans la quantité de génération de chaleur pendant l'incinération est inférieur ou égal au seuil de type de déchets spécial en tant que déchets déversés.

4. Dispositif d'actionnement de grue à déchets selon la revendication 1 ou 2, dans lequel le dispositif de commande (6) commande la grue (5) pour saisir sélectivement la première partie de déchets parmi la pluralité de parties de déchets dans la fosse (21) en utilisant le seuil d'indice obtenu à partir d'une corrélation entre une fréquence de déversement de déchets prescrits où la valeur d'indice de variation du pourcentage de composition des types de déchets est supérieure à un seuil d'indice provisoire dans l'incinérateur de déchets (3) et un degré de combustion des déchets prescrits déversés dans l'incinérateur de déchets (3), et pour déverser la première partie de déchets en tant que déchets déversés dans l'incinérateur de déchets (3).

5. Procédé d'actionnement de grue à déchets comprenant :

le calcul, en utilisant un dispositif de commande (6), d'une valeur d'indice de variation servant d'indice d'une quantité de variation de pourcentages de composition d'une pluralité de types de déchets qui constituent un bloc (R) de déchets dans une fosse (21) par rapport aux pourcentages de composition de la pluralité de types de déchets de déchets précédemment déversés dans un incinérateur de déchets (3), pour chacune d'une pluralité de parties de déchets (W1-W5) comportant chacune un ou plusieurs des blocs (R), sur la base de données sur des pourcentages de composition de types de déchets stockées pour chaque bloc (R) dans un dispositif de stockage (62e), où les blocs sont des objets uniformes parallélépipédiques rectangulaires ;
la sélection d'une première partie de déchets dans laquelle la valeur d'indice de variation est inférieure ou égale à un seuil d'indice en tant que déchets déversés à déverser par la suite dans l'incinérateur de déchets (3) parmi la pluralité de parties de déchets ; et
la saisie sélective des déchets déversés sélectionnés de la fosse (21) et le déversement des déchets déversés dans l'incinérateur de déchets (3) avec une grue (5), la grue (5) agite les déchets dans la fosse (21),
dans lequel le dispositif de commande (6) est configuré pour diviser virtuellement la fosse (21) en une pluralité de zones (P) dans un plan X-Y, la fosse (21) a une forme de boîte parallélépipédique rectangulaire qui s'étend dans le plan X-Y, chaque zone (P) est divisée de manière à avoir une zone (S) suffisante pour qu'une benne (53) de la grue puisse la saisir à la fois,
les déchets dans chaque zone (P) sont pris sous forme d'un empilement de blocs (R) ayant chacun une hauteur d'environ 0,5 m dans un état virtualisé,
le dispositif de commande (6) comprend un dispositif de détermination de position de grue (62), qui comporte un calculateur de pourcentage de types de déchets (62b) configuré pour calculer le pourcentage de composition de types de déchets à une position spécifique dans la fosse (21) et un calculateur de fréquence d'agitation (62c) configuré pour calculer une fréquence d'agitation de déchets par bloc (R), où la position spécifique dans la fosse (21) indique une position en hauteur spécifique d'un bloc (R) dans une zone spécifique (P) de la fosse (21),
le dispositif de détermination de position de grue (62) est configuré pour déterminer, pour chaque bloc (R) dans la zone (P), les types de déchets qui constituent les déchets du bloc (R), le pourcentage de composition de chaque type de déchets et la fréquence d'agitation des déchets du bloc (R),
le calculateur de pourcentage de types de déchets (62b) calcule le pourcentage de composition des déchets pour chaque bloc (R) chaque fois que les déchets dans la fosse (21) sont agités, et
dans lequel le dispositif de commande (6) commande la grue (5) pour saisir sélectivement une deuxième partie de déchets ayant une grande fréquence d'agitation parmi une pluralité des premières parties de déchets (W11, W12, W14, W15) dans la fosse (21) et pour déverser la deuxième partie de déchets (W12) en tant que déchets déversés dans l'incinérateur de déchets (3) lorsque la pluralité de premières parties de déchets existe dans la fosse (21).

FIG.1

## FIG.2

INCINERATOR MONITOR — 7

THROWING-IN INSTRUCTION

100(200,300)

4(104,204)

WASTE CRANE OPERATING DEVICE

CRANE POSITION DETERMINER — 62(162,262)

WASTE VOLUME CALCULATOR — 62a

WASTE TYPE PERCENTAGE CALCULATOR — 62b(162b,262b)

AGITATION FREQUENCY CALCULATOR — 62c

COORDINATE SELECTION CALCULATOR — 62d

STORAGE — 62e

WASTE WEIGHT

BUCKET WEIGHT DETECTOR — 4a

GRASPING COORDINATES, DROPPING COORDINATES, THROWING-IN COORDINATES

CRANE OPERATION CONTROLLER — 6(106,206)

CONTROLLER — 61

CRANE — 5

WASTE WEIGHT

WASTE TYPE

DISPLAY INSTRUCTION

WEIGHT SCALE — 11

WASTE TYPE REGISTER — 12

DISPLAY — 8a

## FIG.3

J COLUMNS

P(a,4)

22

22

21

i ROWS

1 2 3 4 5 6 7 8 9 10 11 12 13 14 15 16

a

b

c

d

e

Y2 Y1 Y

X

21a 21a 21a 21a 21a

P(e,13)

21a

*FIG.4*

WASTE TYPE CHANGE DUE TO AGITATION

| BLOCK | A(%) | B(%) | C(%) | AGITATION FREQUENCY γ |
|-------|------|------|------|-----------------------|
| R1 | 60 | 10 | 30 | 3 |
| R2 | 10 | 20 | 70 | 4 |
| R3 | 30 | 70 | 0 | 2 |

| BLOCK | A(%) | B(%) | C(%) | AGITATION FREQUENCY γ |
|-------|------|------|------|-----------------------|
| R1 | | | | |
| R2 | 50 | 50 | 50 | 4 |
| R3 | | | | |

## FIG.5     THROWING-IN OPERATION (INDEX THRESHOLD = 50)

|    | A(%) | B(%) | C(%) (SPECIAL WASTE TYPE) |
|----|------|------|----------------------------|
| W0 | 40   | 20   | 40                         |

|    | A(%) | B(%) | C(%) (SPECIAL WASTE TYPE) | D(%) | VARIATION INDEX VALUE V |
|----|------|------|----------------------------|------|--------------------------|
| W1 | 40   | 20   | 20                         | 20   | 28.3                     |
| W2 | 30   | 70   | 0                          | 0    | 50.9                     |
| W3 | 30   | 15   | 55                         | 0    | 18.7                     |
| W4 | 50   | 30   | 20                         | 0    | 24.5                     |
| W5 | 40   | 20   | 0                          | 40   | 56.6                     |

FIG.6

THROWING-IN FREQUENCY OF WASTE IN WHICH VARIATION INDEX VALUE EXCEEDS 50 [TIME(S)]

☒ FALL TIME OF VAPOR CONTENT     ◆ THROWING-IN FREQUENCY OF WASTE IN WHICH VARIATION INDEX VALUE EXCEEDS 50

FALL TIME OF VAPOR CONTENT [MINUTE(S)]

0 O'CLOCK - 2 O'CLOCK
2 O'CLOCK - 4 O'CLOCK
4 O'CLOCK - 6 O'CLOCK
6 O'CLOCK - 8 O'CLOCK
8 O'CLOCK - 10 O'CLOCK
10 O'CLOCK - 12 O'CLOCK
12 O'CLOCK - 14 O'CLOCK
14 O'CLOCK - 16 O'CLOCK
16 O'CLOCK - 18 O'CLOCK
18 O'CLOCK - 20 O'CLOCK
20 O'CLOCK - 22 O'CLOCK
22 O'CLOCK - 24 O'CLOCK

*FIG.7*

## DRIVE CONTROL FLOW OF CRANE

```
                    ┌─────────────┐
                    │    START    │
                    └─────────────┘
                           │
                           ▼
              ╱───────────────────────╲      S1
             ╱  THROWING-IN             ╲─────────  No
             ╲  INSTRUCTION?            ╱
              ╲───────────────────────╱
                      │ Yes
                      ▼
          ╱─────────────────────────────╲    S2
         ╱       WASTE                    ╲
        ╱  HAVING VARIATION               ╲───── No
        ╲ INDEX VALUE EQUAL TO OR LESS    ╱
         ╲ THAN INDEX THRESHOLD?         ╱
          ╲─────────────────────────────╱
                      │ Yes
                      ▼
          ╱─────────────────────────────╲    S3
         ╱      PLURALITY                 ╲
        ╱  OF WASTES HAVING VARIATION     ╲──── No
        ╲ INDEX VALUE EQUAL TO OR LESS    ╱
         ╲ THAN INDEX THRESHOLD?         ╱
          ╲─────────────────────────────╱
                      │ Yes   S4
                      ▼
        ┌───────────────────────┐
        │ SELECT WASTE HAVING   │
        │ SMALLEST VARIATION    │
        │ INDEX VALUE           │
        └───────────────────────┘
                      │
                      ▼
        ┌───────────────────────┐  S5
        │ ACQUIRE GRASPING      │
        │ COORDINATES           │
        └───────────────────────┘
                      │         S6
                      ▼
        ┌───────────────────────┐
        │ PERFORM GRASPING      │
        │ CONTROL               │
        └───────────────────────┘
                      │         S7
                      ▼
        ┌───────────────────────┐
        │ PERFORM THROWING-IN   │
        │ CONTROL               │
        └───────────────────────┘
                      │
                      ▼
                ┌───────────┐
                │    END    │
                └───────────┘
```

S8 SELECT AND ACQUIRE GRASPING COORDINATES

S9 PERFORM GRASPING CONTROL

S10 SELECT DROPPING COORDINATES

S11 PERFORM DROPPING CONTROL

27

*FIG.8*     THROWING-IN OPERATION (INDEX THRESHOLD = 50)

GRASPING OPERATION

54

53                    5

W10

R

↑  ↑  ↑  ↑  ↑
P  P  P  P  P

| | A(%) | B(%) | C(%) |
|---|---|---|---|
| W10 | 40 | 20 | 40 |

⇒     THROWN INTO HOPPER  ⇒  INCINERATED IN WASTE INCINERATOR

⇓

WASTE THROWING-IN INSTRUCTION

⇓

GRASPING OPERATION

54

53        5

W12    W15

W11    W14

W13

R

↑  ↑  ↑  ↑  ↑
P  P  P  P  P

...  ⇐  THROWN INTO HOPPER  ⇐

| | A(%) | B(%) | C(%) | D(%) | AGITATION FREQUENCY $\gamma$ | VARIATION INDEX VALUE V |
|---|---|---|---|---|---|---|
| W11 | 40 | 30 | 30 | 0 | 3 | 14.1 |
| W12 | 40 | 20 | 30 | 10 | 4 | 14.1 |
| W13 | 10 | 10 | 40 | 40 | 4 | 51.0 |
| W14 | 60 | 10 | 10 | 20 | 3 | 42.4 |
| W15 | 35 | 25 | 40 | 0 | 2 | 7.1 |

28

*FIG.9*

DRIVE CONTROL FLOW OF CRANE

```
           ┌─────────────┐
           │    START    │
           └──────┬──────┘
                  │         ←──────────────────────┐
                  ▼                        S1       │
              ╱───────────╲                         │
            ╱  THROWING-IN  ╲    No                 │
            ╲  INSTRUCTION? ╱ ──────────────────────┘
              ╲───────────╱
                  │ Yes
                  ▼          ←──────────────────────────────────────┐
              ╱───────────────────────╲        S2                   │
            ╱         WASTE             ╲                            │
          ╱     HAVING VARIATION          ╲    No                   │
          ╲ INDEX VALUE EQUAL TO OR LESS   ╱ ──────────┐            │
            ╲  THAN INDEX THRESHOLD?     ╱              │            │
              ╲───────────────────────╱                │            │
                  │ Yes                                 │            │
                  ▼            S3                        ▼           │
              ╱───────────────────────╲         ┌─────────────────┐ │
            ╱        PLURALITY          ╲        │   SELECT AND    │ │ S8
          ╱   OF WASTES HAVING VARIATION ╲  No   │ ACQUIRE GRASPING│ │
          ╲ INDEX VALUE EQUAL TO OR LESS  ╱ ───┐ │   COORDINATES   │ │
            ╲  THAN INDEX THRESHOLD?     ╱      │ └────────┬────────┘ │
              ╲───────────────────────╱        │          │          │
                  │ Yes      S4a               │          ▼     S9   │
                  ▼                             │ ┌─────────────────┐ │
          ┌─────────────────────┐              │ │     PERFORM     │ │
          │ SELECT WASTE HAVING  │              │ │ GRASPING CONTROL│ │
          │      GREATEST        │              │ └────────┬────────┘ │
          │ AGITATION FREQUENCY  │              │          │          │
          └──────────┬──────────┘  ←───────────┘          ▼    S10   │
                     │              S5             ┌─────────────────┐│
                  ▼                                │  SELECT DROPPING││
          ┌─────────────────────┐                 │   COORDINATES   ││
          │  ACQUIRE GRASPING    │                 └────────┬────────┘│
          │    COORDINATES       │                          │         │
          └──────────┬──────────┘  S6                       ▼    S11  │
                     │                             ┌─────────────────┐│
                  ▼                                │ PERFORM DROPPING ││
          ┌─────────────────────┐                 │     CONTROL      ││
          │  PERFORM GRASPING    │                 └────────┬────────┘│
          │     CONTROL          │                          └─────────┘
          └──────────┬──────────┘  S7
                     │
                  ▼
          ┌─────────────────────┐
          │ PERFORM THROWING-IN  │
          │     CONTROL          │
          └──────────┬──────────┘
                     │
                  ▼
           ┌─────────────┐
           │     END     │
           └─────────────┘
```

FIG.10

GRASPING OPERATION

54
53
5
W20
R

⇨ THROWN INTO HOPPER ⇨ INCINERATED IN WASTE INCINERATOR

⇩

WASTE THROWING-IN INSTRUCTION

⇩

GRASPING OPERATION

P P P P P

| | A(%) | B(%) | C(%) |
|---|---|---|---|
| W20 | 40 | 20 | 40 |

54
53
5
W25
W22  W24
W21
W23
R

··· ⇦ THROWN INTO HOPPER ⇦

P P P P P

| | A(%) | B(%) | C(%) | D(%) | VARIATION INDEX VALUE V |
|---|---|---|---|---|---|
| W21 | 30 | 70 | 0 | 0 | 50.9 |
| W22 | 30 | 15 | 50 | 5 | 15.8 |
| W23 | 40 | 20 | 20 | 20 | 28.3 |
| W24 | 40 | 20 | 0 | 40 | 56.6 |
| W25 | 50 | 30 | 20 | 0 | 24.5 |

*FIG.11*

DRIVE CONTROL FLOW OF CRANE

```
        ┌──────────┐
        │  START   │
        └──────────┘
             │
             ▼
          ╱──────╲           S1
        ╱ THROWING-IN ╲  No
       ╱ INSTRUCTION?  ╲────────┐
        ╲            ╱           │
          ╲──────╱               │
             │ Yes               │
             ▼                   │
    ┌─────────────────┐  S4      │
    │ SELECT WASTE HAVING │      │
    │ SMALLEST VARIATION │      │
    │   INDEX VALUE     │       │
    └─────────────────┘         │
             │                  │
             ▼                  │
    ┌─────────────────┐  S5     │
    │ ACQUIRE GRASPING │        │
    │   COORDINATES    │        │
    └─────────────────┘         │
             │                  │
             ▼                  │
    ┌─────────────────┐  S6     │
    │   PERFORM        │        │
    │ GRASPING CONTROL │        │
    └─────────────────┘         │
             │                  │
             ▼                  │
    ┌─────────────────┐  S7     │
    │   PERFORM        │        │
    │ THROWING-IN CONTROL │     │
    └─────────────────┘         │
             │                  │
             ▼                  │
        ┌──────────┐            │
        │   END    │            │
        └──────────┘            │
```

**EP 3 467 380 B2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10132247 A
- EP 1048900 A1
- JP 2001033019 A
- JP 2017042706 A